# EUROPEAN PATENT APPLICATION

(11) **EP 1 804 233 A1**
(43) Date of publication of application: **04.07.2007**
(21) Application number: 05799365.1
(22) Date of filing: 20.10.2005
(51) Int. Cl.: G09G 5/00, G09G 3/20, B60R 11/02

(54) **DISPLAY DEVICE**

(30) Priority: 20.10.2004 JP 2004305587; 30.11.2004 JP 2004347382; 14.12.2004 JP 2004361402; 07.09.2005 JP 2005259842; 09.09.2005 JP 2005262520; 12.09.2005 JP 2005264288
(71) Applicant: FUJITSU TEN LIMITED, Kobe-shi Hyogo 652-8510 (JP)
(72) Inventor: FUKUDA, Yasuhiro, c/o FUJITSU TEN LIMITED, Kobe-shi, Hyogo 652-8510 (JP); KAMOTO, Mitsuhiro, c/o FUJITSU TEN LIMITED, Kobe-shi, Hyogo 652-8510 (JP); FUJIMOTO, Hiroyuki, c/o FUJITSU TEN LIMITED, Kobe-shi, Hyogo 652-8510 (JP); HASHIMOTO, Yoshiyuki, c/o FUJITSU TEN LIMITED, Kobe-shi, Hyogo 652-8510 (JP); YOKAWA, Taku, c/o FUJITSU TEN LIMITED, Kobe-shi, Hyogo 652-8510 (JP); UETA, Yoshikazu, c/o FUJITSU TEN LIMITED, Kobe-shi, Hyogo 652-8510 (JP); YOSHIMOTO, Takumi, c/o FUJITSU TEN LIMITED, Kobe-shi, Hyogo 652-8510 (JP); SAITO, Tomoki, c/o FUJITSU TEN LIMITED, Kobe-shi, Hyogo 652-8510 (JP); KATO, Takashi, c/o FUJITSU TEN LIMITED, Kobe-shi, Hyogo 652-8510 (JP)
(74) Representative: Sunderland, James Harry
(86) International application number: PCT/JP2005/019741
(87) International publication number: WO 2006/043721

(57) **Abstract**

The invention provides a display device wherein provisions are made to be able to properly adjust the image viewing direction, viewing angle, or viewing range on the display device. The display device includes a display section capable of displaying independent images intended for a plurality of different viewing directions on the same screen, an information acquiring section for acquiring orientation information concerning the orientation of the images, and an image direction varying section for varying the orientation of the images based on the orientation information acquired by the information acquiring section.

## Description

### FIELD OF THE INVENTION

The present invention relates to a display device that can, in effect, simultaneously display different independent information on the same screen for viewing by different individual users.

### BACKGROUND OF THE INVENTION

It is known to provide a display device that displays different images on the same display panel for viewing from different directions, for example, from two different directions (refer, for example, to patent documents 1 and 2). Specifically, there is disclosed a display device that can display two different screens simultaneously on the same liquid crystal display (LCD), allowing, for example, in a vehicle, the driver and the passenger to view the different screens from their respective positions (refer, for example, to patent documents 3 and 4). There is also disclosed a dual screen display device that can simultaneously display two different images on the same screen (refer, for example, to patent documents 5 and 6). Such display devices are also called multiple view display devices.

On the other hand, patent documents 7 and 8 disclose a barrier for limiting viewing directions in order to display stereoscopic images.

For the multiple view display device, it is known to provide a system in which a first audio corresponding to the first video intended for the driver is presented only to the driver, while a second audio corresponding to the second video intended for the passenger is presented only to the passenger (refer, for example, to patent document 9).

Further, a seat equipped with a so-called bone conduction speaker is also known (refer, for example, to patent document 10).

It is also known to vary the directional characteristics of speakers (refer, for example, to patent document 11).

Patent document 1: Japanese Unexamined Patent Publication No. 2004-206089

Patent document 2: Japanese Unexamined Patent Publication No. 2003-137005

Patent document 3: Japanese Unexamined Patent Publication No. H06-186526

Patent document 4: Japanese Unexamined Patent Publication No. 2000-137443

Patent document 5: Japanese Unexamined Patent Publication No. H11-331876

Patent document 6: Japanese Unexamined Patent Publication No. H09-46622

Patent document 7: Japanese Unexamined Patent Publication No. H10-123461

Patent document 8: Japanese Unexamined Patent Publication No. H11-84131

Patent document 9: Japanese Unexamined Patent Publication No. H06-236152

Patent document 10: Japanese Unexamined Patent Publication No. 2004-83004

Patent document 11: Japanese Unexamined Patent Publication No. H11-75284

### SUMMARY OF THE INVENTION

Because of its structure, every display device has a limited viewing angle within which the display is viewable. However, as the position of the viewer of the display device is not fixed, an adjustment must be made to match the position of the viewer.

An object of the present invention is to provide a display device wherein provisions are made to be able to properly adjust the image viewing direction, viewing angle, or viewing range on the display device.

On the other hand, in the case of display devices for automotive applications, traditionally, the display device has been used in such a manner that, when the vehicle is moving, only the navigation screen is displayed and a display screen such as a television screen that would distract the driver's attention is not displayed. However, if a multiple view display device such as earlier described is employed as an automotive display device, it becomes possible to present a television screen for viewing by the passengers seated in the front passenger seat and rear passenger seat, regardless of whether the vehicle is moving or not.

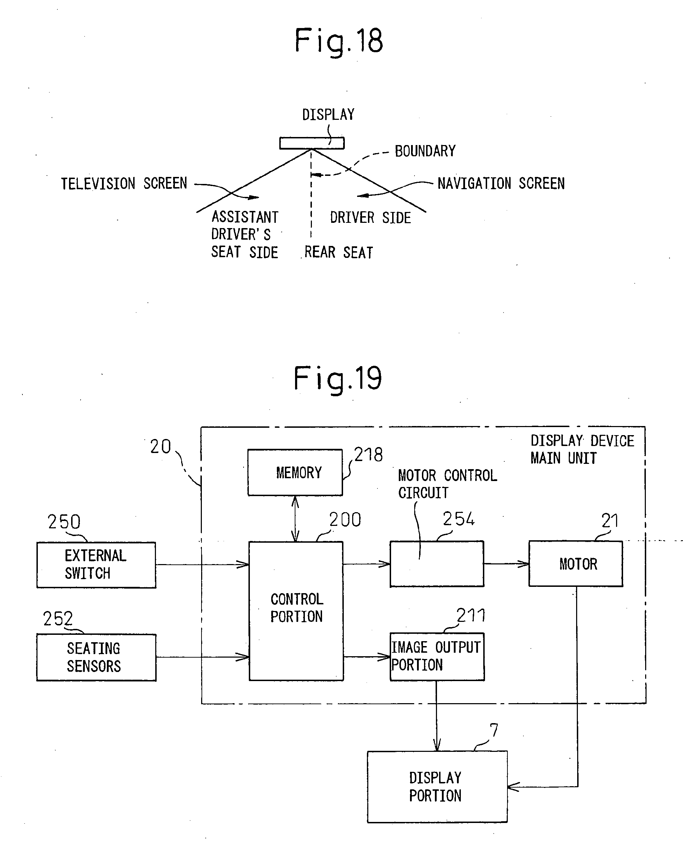

The multiple view display, however, has the shortcoming that both the navigation screen and the television screen are simultaneously visible to the person located in the position substantially corresponding to the center of the display, as shown in Fig. 18. This can give an uncomfortable sensation to the passenger sitting in the rear center seat.

The present invention has been devised in view of the above problem, and an object of the invention is to provide a display device that can display different images on the same screen for viewing from different directions, and that can easily resolve the problem that the different images become simultaneously visible depending on the viewing direction.

Further, the multiple view display device, when mounted in a vehicle, should present both video and sound to each intended viewer, but there has been the problem that because of the presence of a video/sound crosstalk area in the passenger compartment (for example, the area directly opposite the center portion of the display), it is difficult for the viewer (passenger) seated in that area to view or hear only the intended video or sound.

When different videos are being produced on the multiple view display device together with their accompanying sounds, two kinds of videos and sounds are mixed in the passenger compartment, leading to the problem that because of the mixture of different videos and sounds, necessary information cannot be communicated accurately to the occupants of the compartment in such cases as when, for example, an emergency situation occurs.

In view of this, an object of the present invention is to provide a display device and an output control device that enables the sound accompanying each independent display image intended for a particular viewing direction to be correctly directed to the intended area.

It is also an object of the present invention to provide a display device and an output control device that can present a good display image and/or sound to the user even in the crosstalk area.

It is a further object of the present invention to provide a display device and an output control device that enables the different kinds of display images and sounds, simultaneously present in the compartment, to be utilized properly.

A display device according to the present invention includes a display section capable of displaying independent images intended for a plurality of different viewing directions on the same screen, an information acquiring section for acquiring orientation information concerning the orientation of the images, and an image direction varying section for varying the orientation of the images based on the orientation information acquired by the information acquiring section.

A display device according to the present invention includes a display section capable of displaying independent images intended for a plurality of different viewing directions on the same screen,
a light-blocking section for controlling a direction of light emerging from the display section,
an information acquiring section for acquiring light emergence information concerning the direction of the light emerging from the display section, and
a light-blocking position varying section for varying an emerging light blocking position on the light-blocking section in accordance with the light emergence information acquired by the information acquiring section.

In the present invention, the light emergence information is information that indicates a viewing angle adjustment value for each of the viewing directions in which the independent images are output.

The present invention includes a preset section which has a viewing angle adjustment value storing section, connected to the information acquiring section, for storing the viewing angle adjustment value, and a light emergence information output section which for outputting the light emergence information that matches the adjustment value stored in the viewing angle adjustment value storing section to the information acquiring section.

In the present invention, the viewing angle adjustment value storing section stores the viewing angle adjustment value for each of the viewing directions in which the independent images are output.

In the present invention, the viewing angle adjustment value storing section stores a plurality of viewing angle adjustment values for each of the viewing directions in which the independent images are output.

In the present invention, the light-blocking position varying section is formed from a liquid crystal light-transmission/blocking plate which controls the transmission/blocking of light by using liquid crystal elements.

In the present invention, the information acquiring section acquires the light emergence information by taking as an input a signal entered via a viewing angle adjusting switch to adjust the viewing angle.

The present invention includes an adjustment image displaying section for displaying an adjustment image on the display section while the adjustment is being made using the viewing angle adjusting switch.

The present invention includes an adjustment value displaying section for displaying an image showing the viewing angle adjustment value on the display section while the adjustment is being made using the viewing angle adjusting switch.

The present invention includes a viewable range adjusting section for reducing a viewable range, an angle range within which an intended image is viewable, while the adjustment is being made using the viewing angle adjusting switch.

In the present invention, the information acquiring section acquires the light emergence information by taking as an input a driving condition signal that indicates a vehicle driving condition.

In the present invention, the information acquiring section acquires the light emergence information by taking as an input a temperature signal that indicates an ambient temperature.

In the present invention, the information acquiring section acquires the light emergence information by taking as an input a position signal that indicates a viewer's position.

In the present invention, the information acquiring section acquires the light emergence information by taking as an input an eye position signal that indicates the positions of the left and right eyes of the viewer,
and the light-blocking position varying section varies the emerging light blocking position on the light-blocking section so that the viewer can view the independent images with his left and right eyes, respectively.

A display device according to the present invention includes a display section capable of displaying independent images intended for a plurality of different viewing directions on the same screen,
a light-blocking section for controlling a direction of light emerging from the display section,
a viewable range information acquiring section for acquiring viewable range information that indicates a viewable range defining an angle range within which an intended image is viewable, and
a light-blocking position varying section for varying an emerging light blocking position on the light-blocking section in accordance with the viewable range information acquired by the viewable range information acquiring section.

In the present invention, the viewable range information is information that indicates a viewable range adjustment value for each of the viewing directions in which the independent images are output.

The present invention includes a preset section which has a viewable range information storing section, connected to the viewable range information acquiring section, for storing the viewable range adjustment value, and
a viewable range information output section for outputting the viewable range information that matches the adjustment value stored in the viewable range information storing section to the viewable range information acquiring section.

In the present invention, the viewable range information storing section stores the viewable range adjustment value for each of the viewing directions in which the independent images are output.

In the present invention, the viewable range information storing section stores a plurality of viewable range adjustment values for each of the viewing directions in which the independent images are output.

In the present invention, the viewable range information acquiring section acquires the viewable range information by taking as an input a signal entered via a viewable range adjusting switch to adjust the viewable range.

A display device according to the present invention includes a display section capable of displaying independent images intended for a plurality of different viewing directions on the same screen, and
a light-blocking section for controlling a direction of light emerging from the display section so that a viewing angle for an image intended for a driver's seat and a viewing angle for an image intended for an assistant driver's seat differ from each other, the viewing angle being measured along a width direction of a vehicle in which the display section is mounted.

In the present invention, the light-blocking section controls the direction of the light emerging from the display section so that the viewing angle for the image intended for the assistant driver's seat becomes wider than the viewing angle for the image intended for the driver's seat.

In the present invention, the light-blocking section controls the direction of the light emerging from the display section so that the viewing angle for the image intended for the driver's seat becomes wider than the viewing angle for the image intended for the assistant driver's seat.

A display device according to the present invention includes a display section capable of displaying independent display images intended for a plurality of different viewing directions on the same screen, an information acquiring section for acquiring orientation information concerning the orientation of the display section, and a display direction varying section for varying the orientation of the display section based on the orientation information acquired by the information acquiring section.

Preferably, the present invention further comprises a sensor for detecting the position of an observer observing the display section, and the information acquiring section acquires, as the orientation information, position information supplied from the sensor. For example, a seating sensor is provided for each seat in the vehicle in which the display device is mounted, and the presence or absence of an occupant in each seat is detected based on the signal from the seating sensor; then, the orientation of the display section is varied by tilting the display at an optimum angle according to the arrangement of the occupants within the vehicle.

Preferably, the present invention further comprises a storing section in which the orientation information to be set in accordance with the position of the observer of the display section is stored in advance, and the information acquiring section acquires the orientation information from the position information by using the storing section. For example, a table in which the occupant arrangement is associated with the display section orientation information is constructed and stored in advance in the storing section, and the optimum orientation information is obtained by referring to the table.

Preferably, in the present invention, the information acquiring section displays on the display section an indication relating to a change in the orientation of the display section.

Preferably, in the present invention, the information acquiring section displays on the display section an indication relating to the position of the observer of the display section.

Preferably, the present invention further includes an interface section for acquiring vehicle information concerning the vehicle in which the display device is mounted, and the information acquiring section acquires as the orientation information the vehicle information acquired via the interface section. For the interface section, use can be made, for example, of a LAN unit for connecting to an automotive LAN, a communication unit for accessing an external server via the Internet, etc.

Preferably, the present invention further includes a storing section in which the orientation information to be set in accordance with the vehicle information is stored in advance, and the information acquiring section acquires the orientation information from the vehicle information by using the storing section. For example, a table in which the vehicle information is associated with the display section orientation information is constructed and stored in advance in the storing section, and the optimum orientation information is obtained by referring to the table.

A display device according to the present invention includes a display section capable of displaying independent display images intended for a plurality of different viewing directions on the same screen, and a display direction setting section for setting the orientation of the display section in such a manner that the display section is laterally asymmetrically positioned with respect to a vehicle in which the display section is mounted.

Preferably, in the present invention, the display direction setting section sets the orientation of the display section in accordance with the vehicle in which the display section is mounted, in such a manner that the independent display images intended for the plurality of different viewing directions will not become simultaneously visible to any occupant seated in the vehicle. Thus, the orientation of the display section is set so that no occupants are located in the crosstalk area.

Preferably, in the present invention, the display direction setting section sets the orientation of the display section in such a manner that the number of occupants who can view the image intended for the driver's seat from among the independent display images intended for the plurality of different viewing directions becomes larger than the number of occupants who can view the image intended for assistant driver's seat from among the independent display images intended for the plurality of different viewing directions. Thus, the orientation of the display section is set so as to increase the area where the display image intended for the driver can be seen.

Preferably, in the present invention, the display direction setting section sets the orientation of the display section in such a manner that the number of occupants who can view the image intended for assistant driver's seat from among the independent display images intended for the plurality of different viewing directions becomes larger than the number of occupants who can view the image intended for the driver's seat from among the independent display images intended for the plurality of different viewing directions. Thus, the orientation of the display section is set so as to increase the area where the display image intended for the front-seat passenger can be seen.

Preferably, the present invention further includes an information acquiring section for acquiring orientation information concerning the orientation of the display section, and the display direction setting section varies the orientation of the display section based on the orientation information acquired by the information acquiring section.

Preferably, in the present invention, the display direction setting section includes a mounting member for mounting the display device in such a manner that the display device having the display section is oriented at a prescribed angle with respect to the vehicle in which the display device is mounted. By mounting the display device itself at an angle in the vehicle, the display section is set in a prescribed direction.

Preferably, in the present invention, the display direction setting section includes a mounting member for mounting the display section in such a manner that the display section is set with a prescribed orientation with respect to the display device. By mounting the display section at an angle in the display device, the display section is set in a prescribed direction.

Preferably, in the present invention, the display section includes a liquid crystal display panel for displaying the display images, and the display direction setting section includes a mounting member for mounting the liquid crystal display panel in such a manner that the liquid crystal display panel is set with a prescribed orientation with respect to the display section. By mounting the liquid crystal display panel at an angle in the display section, the display section is, in effect, set in a prescribed direction.

The present invention provides a display device having a display section and capable of presenting different display images for viewing from different directions, includes storing means for storing information concerning preset orientation of the display section; panel direction varying means for varying the orientation of the display section, and control means for setting the orientation of the display section for use, based on the information stored in the storing means.

Preferably, the present invention further includes a sensor for detecting the position of the observer, and the control means, based on an output of the sensor, sets the orientation of the display section in accordance with the position of the observer.

Preferably, in the present invention, the storing means stores in advance the orientation of the display section to be set in accordance with the position of the observer, and the control means controls the panel direction varying means, based on the output of the sensor and on the orientation of the display section that is stored in the storing means and that is to be set in accordance with the position of the observer.

Preferably, in the present invention, when varying the orientation of the display section, the control means displays information concerning the orientation of the display section on the display screen of the display section.

Preferably, in the present invention, when varying the orientation of the display section by controlling driving means, the control means displays information concerning the position of the observer on the display screen of the display section.

Preferably, in the present invention, the orientation of the display section to be set in accordance with each of a plurality of combinations of observers' positions is stored in advance in the storing means.

Preferably, in the present invention, the display device is mounted in a vehicle, and the sensor is mounted in each seat to detect the presence or absence of an occupant in the seat.

A display device according to the present invention includes a display section capable of displaying independent display images intended for a plurality of different viewing directions on the same screen, and a sound control section for controlling a plurality of sound output sections so that sounds intended for viewing areas for the plurality of display images are localized in the respective viewing areas.

Preferably, in the present invention, for an area where the independent display images intended for the respective viewing directions are simultaneously visible, the sound control section performs control so that, of the sounds accompanying the simultaneously visible display images, a selected one sound is localized in that area. For example, when the output control device according to the present invention is mounted in a vehicle, control is performed so that only either one of the sounds is localized in or near the crosstalk area.

Preferably, in the present invention, for an area where the independent display images intended for the respective viewing directions are simultaneously visible, the sound control section performs control so that all the sounds accompanying the simultaneously visible display images are localized in that area. For example, when the output control device according to the present invention is mounted in a vehicle, control is performed so that both sounds are localized in or near the crosstalk area.

Preferably, the present invention further includes a selecting section for selecting the sound to be localized in the area where the independent display images intended for the respective viewing directions are simultaneously visible. For example, when the output control device according to the present invention is mounted in a vehicle, a determination as to which sound is to be localized in the crosstalk area can be made in accordance with the user's preference.

Preferably, the present invention further includes a viewing area information acquiring section for acquiring viewing area information that matches a viewing area for one display image selected from among the independent display images intended for the plurality of different viewing directions, and the sound control section controls the sound output sections in accordance with the viewing area information so that the sound accompanying the selected one display image is localized in the viewing area. For example, when the viewing angle of the display section is adjusted, the sound accompanying the display image is presented to the viewing area defined by the viewing angle.

Preferably, the present invention further includes an importance level information acquiring section for acquiring importance level information that matches the importance level of the sound that each of the sound output sections outputs, and the sound control section performs control so as to output the sound that has been judged to contain important information based on the importance level information. That is, provisions are made to output the sound that has been judged to be important based on the importance level of the information carried therein.

Preferably, in the present invention, the sound control section performs control so that, when the sound ends for one of the independent display images intended for the plurality of different viewing directions, the sound for another display image is output. Suppose, for example, that the video and sound from DVD software is being presented in one direction, while the sound from CD music software that repeats itself is being presented in the other direction; in this situation, when the playback of the DVD ends, the sound being played back from the CD music software is used to prevent interruption in the sound output.

Preferably, the present invention further includes selecting means for selecting the sound to be output from among the sounds accompanying the independent display images intended for the plurality of different viewing directions. That is, provisions are made so that the user can break into the other sound as needed.

Preferably, in the present invention, the sound output sections include a plurality of speakers and, based on the content of the sound accompanying one of the independent display images intended for the plurality of different viewing directions, the sound control section determines from which of the speakers the sound is to be output. That is, provisions are made to allow the sound to break into the other sound, depending on the content of the sound.

Preferably, the present invention further includes a selecting section for selecting a sound that matches a viewing position, and the sound control section controls the sound output sections so that the sound selected by the selecting section is localized in the viewing position. That is, provisions are made so that the sound to be presented can be selected for each viewing position (each seat in the vehicle).

Preferably, the present invention further includes a plurality of sound detecting sections, and the sound control section controls the sound output sections so that the sound selected by the selecting section is localized in the viewing position by canceling any sound other than the selected sound as noise in that viewing position in accordance with sound detection signals supplied from the plurality of sound detecting sections. That is, based on the sound detection signal supplied from the sound detecting section located near the intended viewing position, any sound not intended for that viewing position is canceled as noise so that only the intended sound can be heard clearly.

Preferably, the present invention further includes an image source section which outputs image data to the display section in order to display the independent display images intended for the plurality of different viewing directions, wherein the image source section includes a receiver for receiving TV images from broadcast channels or a playback section for playing back an image recording medium. That is, provisions are made so that, using the same display section, for example, a TV image from one channel and a TV image from another channel can be simultaneously presented for viewing by different observers, or a reproduced image from one DVD and a reproduced image from another DVD can be simultaneously presented for viewing by different observers, or a first reproduced image (multi-angle image 1) from a DVD and a second reproduced image (multi-angle image 2) from the same DVD can be simultaneously presented for viewing by different observers.

Preferably, in the present invention, the sound output sections include speakers and headphones or earphones, and the sound control section performs control so that the sound for the viewing area for one of the independent display images intended for the plurality of different viewing directions is output from the speakers while the sound for the viewing area for another one of the independent display images intended for the plurality of different viewing directions is output from the headphones or earphones. That is, provisions are made so that the sound intended for the driver can be output, for example, from the speakers, while presenting the sound intended for the passenger through the headphones or earphones.

Preferably, in the present invention, the sound output sections include a bone conduction speaker or a directional speaker. That is, provisions are made so that, using a bone conduction speaker or a directional speaker, a clear sound can be presented, for example, to the crosstalk area, etc.

A display device according to the present invention includes a display section capable of displaying independent display images intended for a plurality of different viewing directions on the same screen, a display control section which supplies display data by processing an image source, and a sound control section for controlling a plurality of sound output sections so that sounds intended for viewing areas for the plurality of display images are localized in the respective viewing areas.

An output display device according to the present invention includes an image control section which performs control so that a first image output from a first source or a second image output from a second source is displayed on a display section that can produce a display viewable from a first viewing direction and a display viewable from a second viewing direction, and a sound control section which performs control so that a first sound output from the first source or a second sound output from the second source is output from a plurality of sound output sections.

Preferably, in the present invention, the plurality of sound output means are controlled so that only either one of the first and second sounds is localized in or near the crosstalk area occurring between the first and second images. For example, when the output control device according to the present invention is mounted in a vehicle, control is performed so that only either one of the sounds is localized in or near the crosstalk area.

Preferably, in the present invention, the plurality of sound output means are controlled so that both the first and second sounds are localized in or near the crosstalk area occurring between the first and second images. For example, when the output control device according to the present invention is mounted in a vehicle, control is performed so that both sounds are localized in or near the crosstalk area.

Preferably, the present invention further includes selecting means for making a selection as to which of the first and second sounds is to be localized in or near the crosstalk area occurring between the first and second images. For example, when the output control device according to the present invention is mounted in a vehicle, a determination as to which sound is to be localized in the crosstalk area can be made in accordance with the user's preference.

Preferably, the present invention further includes a viewing area information acquiring section for acquiring first viewing area information that matches a first viewing position where the first image is visible, and the sound control section controls the plurality of sound output sections in accordance with the first viewing area information so that the first sound accompanying the first image is localized in the first viewing position. That is, when the viewing angle of the display section is adjusted, the sound accompanying the image is presented to the viewing area defined by the viewing angle.

Preferably, the present invention further includes an importance level information acquiring section for acquiring importance level information that matches the importance level of the first and second sound, and the sound control section performs control so that, when the first or second sound is judged to contain important information based on the importance level information, the first or second sound that has been judged to contain important information is output from all of the plurality of sound output sections. That is, provisions are made to output the sound that has been judged to be important based on the importance level of the information carried therein.

Preferably, in the present invention, the sound control section performs control so that, when either one of the first and second sounds ends, the other one of the first and second sounds is output from all of the plurality of sound output sections. Suppose, for example, that the video and sound from DVD software is being reproduced from one source, while the sound from CD music software that repeats itself is being reproduced from the other source; in this situation, when the playback of the DVD ends, the sound being played back from the CD music software is used to prevent interruption in the sound output.

Preferably, the present invention further includes selecting means for making a selection as to from which of the plurality of sound output sections the first or second sound is to be output. That is, provisions are made so that the user can break into the other sound as needed.

Preferably, in the present invention, the sound control section makes a decision as to from which of the plurality of speakers the first or second sound is to be output, based on the content of the first and second sounds. That is, provisions are made to allow either sound to break into the other sound, depending on the content of the sound.

Preferably, the present invention further includes a selecting section for selecting for each viewing position the sound that matches the viewing position, and the sound control section controls the plurality of sound output sections so that either the first sound or the second sound is localized in each viewing position in accordance with the selection made by the selecting section. That is, provisions are made so that the sound to be presented can be selected for each viewing position (for example, each seat in the vehicle).

Preferably, the present invention further includes a plurality of sound detecting sections one for each viewing position, and the sound control section controls the plurality of sound output sections so that either the first sound or the second sound is localized in each viewing position by canceling any sound other than the selected sound as noise in each viewing position in accordance with sound detection signals supplied from the plurality of sound detecting sections. That is, based on the sound detection signal supplied from the sound detecting section located near the intended viewing position, any sound not intended for that viewing position is canceled as noise so that only the intended sound can be heard clearly.

Preferably, in the present invention, the first and second sources constitute a receiver for receiving TV images from a plurality of broadcast channels, wherein the first image is a TV image from a first channel received by the receiver, and the second image is a TV image from a second channel which is different from the first channel received by the receiver. That is, provisions are made so that, using the same display section, a TV image from one channel and a TV image from another channel can be simultaneously presented for viewing by different observers.

Preferably, in the present invention, the first source is a first image output section for outputting first image data from a first image recording medium, and the second source is a second image output section for outputting second image data from a second image recording medium. That is, provisions are made so that, using the same display section, a reproduced image from one DVD and a reproduced image from another DVD can be simultaneously presented for viewing by different observers.

Preferably, in the present invention, the first and second sources constitute an image output section for outputting a plurality of image data from an image recording medium, wherein the first image is first image data output from the image output section, and the second image is second image data which is different from the first image data output from the image output section. That is, provisions are made so that, using the same display section, a first reproduced image (multi-angle image 1) from a DVD and a second reproduced image (multi-angle image 2) from the same DVD can be simultaneously presented for viewing by different observers.

Preferably, in the present invention, the plurality of sound output sections include speakers and headphones or earphones, and the sound control section performs control so that the sound intended for the driver is output from the speakers while the sound intended for the passenger or directed to the crosstalk area occurring between the first and second images is output from the headphones or earphones. That is, provisions are made so that the sound intended for the driver can be output from the speakers, while presenting the sound intended for the passenger through the headphones or earphones.

Preferably, in the present invention, the plurality of sound output sections include the speaker mounted on the driver seat side and the speaker mounted on the front passenger seat side, wherein the first sound is output from the speaker mounted on the driver seat side and the second sound is output from the speaker mounted on the front passenger seat side.

Preferably, in the present invention, the plurality of sound output sections include a bone conduction speaker or a directional speaker. That is, provisions are made so that, using a bone conduction speaker or a directional speaker, a clear sound can be presented, for example, to the crosstalk area, etc.

An output display device according to the present invention includes an image control section which performs control so that a first image output from a first source or a second image output from a second source is displayed on a display section that can produce a display viewable from a first viewing direction and a display viewable from a second viewing direction; and a sound control section which performs control so that a first sound output from the first source or a second sound output from the second source is output from a plurality of sound output sections, wherein the first and second sources constitute a receiver for receiving TV images from a plurality of broadcast channels, and wherein the first image is a TV image from a first channel received by the receiver, and the second image is a TV image from a second channel which is different from the first channel received by the receiver.

An output display device according to the present invention includes an image control section which performs control so that a first image output from a first source or a second image output from a second source is displayed on a display section that can produce a display viewable from a first viewing direction and a display viewable from a second viewing direction, and a sound control section which performs control so that a first sound output from the first source or a second sound output from the second source is output from a plurality of sound output sections, wherein the first source is a first image output section for outputting first image data from a first image recording medium, and the second source is a second image output section for outputting second image data from a second image recording medium.

An output display device according to the present invention includes an image control section which performs control so that a first image output from a first source or a second image output from a second source is displayed on a display section that can produce a display viewable from a first viewing direction and a display viewable from a second viewing direction, and a sound control section which performs control so that a first sound output from the first source or a second sound output from the second source is output from a plurality of sound output sections, wherein the first and second sources constitute an image output section for outputting a plurality of image data from an image recording medium, and wherein the first image is first image data output from the image output section, and the second image is second image data which is different from the first image data output from the image output section.

An audio visual device according to the present invention includes a display section which can produce a display viewable from a first viewing direction and a display viewable from a second viewing direction, a first source which outputs a first image or a first sound, a second source which outputs a second image or a second sound, an image control section which performs control so that the first image output from the first source or the second image output from the second source is displayed on the display section, a plurality of sound output sections, and a sound control section which performs control so that the first sound output from the first source or the second sound output from the second source is output from the plurality of sound output sections.

According to the present invention, as the light-blocking position varying section varies the emerging light blocking position of the light-blocking section in accordance with the acquired light emergence information, the following advantageous effect is offered. Optimum light blocking positions of the light-blocking section can be obtained for various pieces of light emergence information. As the light-blocking position of the light-blocking section can be varied in accordance with the light emergence information acquired by the information acquiring section, the following advantages are offered compared with the prior art that performs control primarily by driving the slits using a driving source such as a motor: (1) the number of components can be reduced, (2) response of the viewing angle adjustment can be enhanced, and (3) the fabrication cost and the size of the display device can be reduced because of the advantage (1). Furthermore, as the viewing angle adjustment can be accomplished by varying the light-blocking position of the light-blocking section in accordance with the light emergence information acquired by the information acquiring section, the viewing angle or viewing range of the display device can be adjusted properly.

According to the present invention, independent images can be easily output in a plurality of different directions. It also becomes possible to reduce crosstalk.

Further, according to the present invention, as the light emergence information that matches the adjustment value stored in the viewing angle adjustment value storing section is output to the information acquiring section, the viewing angle can be adjusted easily and quickly. In other words, once the adjustment value is stored in the viewing angle adjustment value storing section, the emerging light blocking position of the light-blocking section is obtained uniquely in accordance with the adjustment value. As a result, the viewing angle adjustment can be accomplished quickly and easily.

According to the present invention, as the viewing angle adjustment value is stored for each of the viewing directions in which the independent images are output, the viewing angle is set that matches the viewer located in each designated direction.

According to the present invention, as a plurality of viewing angle adjustment values are stored for each of the viewing directions in which the independent images are output, the viewing angle is set that best matches the viewer located in each designated direction. Thus, the plurality of viewers located in the plurality of different directions can clearly view the different images intended for the respective viewers.

According to the present invention, the light-transmission/blocking control can be accomplished using liquid crystal elements. Accordingly, compared with the prior art that performs the control by driving the slits using a driving source, not only can the structure be simplified, but the size of the display device can be reduced.

According to the present invention, in response to a signal entered via the viewing angle adjusting switch, the light emergence information is acquired and the light-blocking position of the light-blocking section is varied. The viewer can manually operate the viewing angle adjusting switch to make the adjustment.

According to the present invention, as the adjustment image is displayed during the adjustment by the viewing angle adjusting switch, the viewer can operate the viewing angle adjusting switch while viewing the adjustment image.

According to the present invention, as an image showing the viewing angle adjustment value is displayed during the adjustment by the viewing angle adjusting switch, the viewer can operate the viewing angle adjusting switch while checking the viewing angle adjustment value. This serves to enhance the reproducibility of the viewing angle adjustment.

According to the present invention, by reducing the viewable range during the adjustment by the viewing angle adjusting switch, the viewing angle can be adjusted with high accuracy.

According to the present invention, by inputting a vehicle driving condition signal, the light blocking position of the light-blocking section is varied so as to match the vehicle driving condition. The viewer need not move his head, etc. to counteract the vehicle driving condition. This alleviates the strain of the viewer.

According to the present invention, by inputting a temperature signal, the light blocking position of the light-blocking section can be compensated for ambient temperature. This enhances the accuracy of the viewing angle adjustment.

According to the present invention, by inputting a position signal and thereby identifying the position of the viewer, the viewing angle can be adjusted with high accuracy so as to match the position of the viewer.

According to the present invention, an eye position signal is input; in this case, since the viewer can view different images separately with his left and right eyes, the viewer can view a stereoscopic image.

Furthermore, according to the present invention, since the light-blocking position varying section varies the emerging light blocking position of the light-blocking section in accordance with the acquired viewable range information, the following advantageous effect is offered. Optimum light blocking positions of the light-blocking section can be obtained for various pieces of viewable range information. As the viewable range adjustment can be accomplished by varying the light-blocking position of the light-blocking section placed on the front side of the display section in accordance with the viewable range information acquired by the viewable range information acquiring section, the same effect as that in claim 1 can be achieved.

According to the present invention, independent images can be easily output in a plurality of different directions. It also becomes possible to reduce crosstalk.

Further, according to the present invention, as the viewable range information that matches the adjustment value stored in the viewable range adjustment value storing section is output to the viewable range information acquiring section, the viewable range can be adjusted easily and quickly. In other words, once the adjustment value is stored in the viewable range adjustment value storing section, the emerging light blocking position of the light-blocking section is obtained uniquely in accordance with the adjustment value. As a result, the viewable range adjustment can be accomplished quickly and easily.

According to the present invention, as the viewable range adjustment value is stored for each of the viewing directions in which the independent images are output, the viewable range is set that matches the viewer located in each designated direction.

According to the present invention, as a plurality of viewable range adjustment values are stored for each of the viewing directions in which the independent images are output, the viewable range is set that best matches the viewer located in each designated direction. Thus, the plurality of viewers located in the plurality of different directions can clearly view the different images intended for the respective viewers.

According to the present invention, in response to a signal entered via the viewable range adjusting switch, the viewable range information is acquired and the light blocking position of the light-blocking section is varied. The viewer can manually operate the viewable range adjusting switch to make the adjustment.

Furthermore, according to the present invention, as the light-blocking section controls the direction of the light emerging from the display section so that the viewing angle for the image intended for the driver's seat and the viewing angle for the image intended for the front-seat passenger differ from each other, image quality can be enhanced for the image intended for one side by eliminating crosstalk, etc. compared with the image intended for assistant driver's seat.

According to the present invention, the image quality of the assistant driver's seat image can be enhanced by making the viewing angle for the passenger-side image wider than that for the driver's seat image. This allows the viewer on the assistant driver's seat side to enjoy the assistant driver's seat image while retaining the range over which the assistant driver's seat viewer can freely move.

According to the present invention, the image quality of the driver's seat image can be enhanced by making the viewing angle for the driver's seat image wider than that for the assistant driver's seat image.

According to the present invention, by making the orientation of the display section adjustable, all of the earlier described problems are resolved. That is, the problem that the different images become simultaneously visible depending on the viewing direction is solved by a simple adjustment, and the adjustment can be performed automatically. The present invention provides a display device that offers excellent usability especially in automotive applications.

According to the present invention, the desired sound or display image can be presented to the crosstalk area.

According to the present invention, when a plurality of sounds and/or display images are being reproduced from the display device, the sound output can be switched to the specified sound as needed.

### BRIEF DESCRIPTION OF THE DRAWINGS

Fig. 1 is a diagram schematically illustrating a display device according to the present invention;
Fig. 2 is a perspective view illustrating an example of mounting the display device;
Fig. 3 is a schematic view illustrating the structure of a display unit in cross section;
Fig. 4 is a schematic view illustrating the structure of a liquid crystal display panel as viewed from the front;
Fig. 5 is a circuit diagram schematically illustrating a TFT substrate;
Fig. 6 is a block diagram schematically illustrating the display device according to the present invention;
Fig. 7 is a block diagram schematically illustrating an image output unit 211;
Fig. 8 is a block diagram schematically illustrating a control unit 200;
Fig. 9 is a block diagram schematically illustrating a memory 218;
Fig. 10 is a diagram showing a display device 1 according to an embodiment of the present invention, in which Fig. 10(A) shows one example of an image output to the driver side, Fig. 10(B) shows one example of an image output to the passenger side, and Fig. 10(C) shows a cross-sectional view of an essential portion;
Fig. 11 is a block diagram of a control system for the display device 1;
Fig. 12 is a schematic diagram showing the viewing angle adjustment of the display device 1 in a step-by-step manner, in which Fig. 12(A) shows the condition before the viewing angle adjustment, Fig. 12(B) shows a first step in the viewing angle adjustment, and Fig. 12(C) shows a second step in the viewing angle adjustment;
Fig. 13 is a diagram showing the positional relationship of a light-blocking portion 108 relative to a color filter substrate 53, in which Fig. 13(A) shows the condition in which the light-blocking portion 108 is set in its reference position, Fig. 13(B) shows the condition in which the light blocking position of the light-blocking portion 108 is shifted to the left, and Fig. 13(C) shows the condition in which the light blocking position of the light-blocking portion 108 is shifted to the right;
Fig. 14 is a schematic diagram showing the viewable range (angle range) adjustment of the display device 1 in a step-by-step manner, in which Fig. 14 (A) shows the condition before the viewable range adjustment is made, and Fig. 14(B) shows the condition in which the viewable range adjustment is being made;
Fig. 15 is a flowchart outlining a light blocking position adjusting process according to the embodiment of the present invention;
Fig. 16 is a flowchart showing a light blocking position adjusting process according to the embodiment of the present invention;
Fig. 17 is a flowchart showing an adjustment value storing process according to the embodiment of the present invention;
Fig. 18 is a diagram for explaining the problem that occurs when a multiple view display device is used as an automotive display device;
Fig. 19 is a block diagram showing the configuration of a multiple view display device as one embodiment of the display device according to the present invention;
Fig. 20 is a block diagram showing an alternative configuration of the multiple view display device as one embodiment of the display device according to the present invention;
Fig. 21 is a diagram for explaining a structure that allows a display portion to be turned left and right using a driving motor;
Fig. 22 is a diagram showing how the orientation of the display portion is changed relative to the seats in a vehicle, in which Fig. 22(A) is a diagram showing the condition before the change, and Fig. 22(B) is a diagram showing the condition after the change;
Fig. 23 is a diagram showing by way of example the relationship between the orientation of the display portion and the seating positions in the vehicle, in which Fig. 23(A) is a diagram showing the same condition as Fig. 22(B), and Fig. 23(B) is a diagram showing the condition in which the orientation of the display portion is adjusted in the opposite direction to that shown in Fig. 23(A);
Fig. 24 is a diagram showing an arrangement of a plurality of seating sensors installed in the respective seats;
Fig. 25 is a diagram showing an example of a screen display produced when changing the orientation of the display portion;
Fig. 26 (A) is a diagram showing an example in which the display device is mounted in a left-right symmetric fashion in the vehicle, and Fig. 26(B) is a diagram showing an example in which the display device is mounted in a left-right asymmetric fashion in the vehicle;
Fig. 27(A) is a diagram showing the condition in which a frame member is not lowered, Fig. 27(B) is a diagram showing the condition in which the frame member is lowered in a sliding manner, and Fig. 27(C) shows a cross section of Fig. 27(B);
Fig. 28(A) is a diagram showing the condition in which the frame member is not lowered, Fig. 28(B) is a diagram showing the condition in which the frame member is lowered in a sliding manner, and Fig. 28(C) shows a cross section of Fig. 28(A);
Fig. 29 is a block diagram schematically showing the configuration of the display device according to the embodiment of the present invention;
Fig. 30 is a diagram showing an example of arrangement of speakers and sensors;
Fig. 31 is a diagram schematically showing a cross-sectional shape of the display portion;
Fig. 32(A) is a diagram showing an example of a display image output to the driver's seat side, and Fig. 32(B) is a diagram showing an example of a display image output to the assistant driver's seat side;
Fig. 33 is a diagram showing viewing ranges and sound output ranges;
Fig. 34 is a diagram showing an example in which changes are made to the viewing ranges and sound output ranges;
Fig. 35 is a diagram showing another example in which changes are made to the viewing ranges and sound output ranges;
Fig. 36 is a diagram showing an example of how a bone conduction speaker is mounted;
Fig. 37 is a diagram showing a configuration example of a directional speaker; and
Fig. 38(A) is a diagram showing one example of sound output produced by directional speakers, and Fig. 38(B) is a diagram showing another example of sound output produced by directional speakers.

### DESCRIPTION OF THE PREFERRED EMBODIMENTS

Various embodiments of the present invention will be described below with reference to the drawings. In each embodiment, parts corresponding to those already described in the preceding embodiment(s) are designated by the same reference numerals, and a description already given may not be repeated. It is to be understood that when only a portion of a given configuration is described, the remaining portion of the configuration is the same as the corresponding portion described in the preceding embodiment(s). It should also be noted that, besides the combinations of parts specifically described in the embodiments given herein, it is also possible to partially combine different embodiments as long as the resulting combination does not present any particular problem.

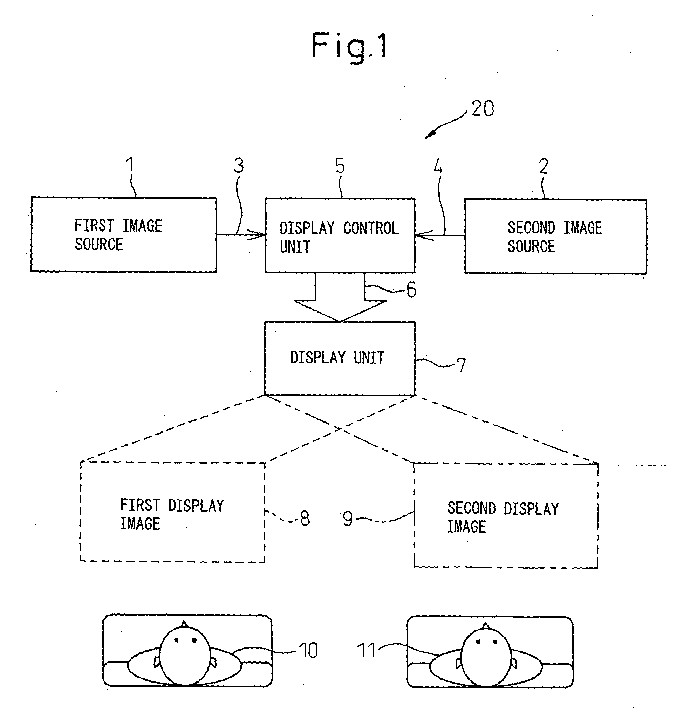

Fig. 1 is a diagram schematically illustrating a display device 20 according to the present invention.

The display device 20 (referred to "multiple view display device") has a display control unit 5 (control unit) and a display unit 7. A first image data 3 and a second image data 4 thereof are fed to the display control unit 5 in which they are so processed as can be displayed on the display unit 7 substantially simultaneously. The first image source 1 is, for example, a DVD player or a TV receiver. The first image data includes a movie image or a received image which is outputted from the DVD (Digital Versatile Disk) player or the TV receiver. The second image source 2 is, for example, a car navigation device. The second image data includes a map or a route guide image which is outputted from the car navigation device.

The observer 10 is allowed to watch the first display image 8 while the observer 11 is allowed to view the second display image 9 substantially simultaneously depending upon the positions of the observers 10 and 11 relative to the display unit 7 or, in other words, depending upon their visual field angles relative to the display unit 7. The observer 10 is allowed to watch the first display image 8 while the observer 11 is allowed to view the second display image 9 substantially simultaneously. The display unit 7 fed with the display data from the display control unit 5 is constituted by a liquid crystal display panel or the like equipped with a parallax barrier that will be described later. A half of the total pixels of the display unit 7 in the longitudinal direction (the transverse direction) are used for displaying the first display image 8 based on the first image source 1. Another half of the pixels are used for displaying the second display image 9 based on the second image source 2.

The observer 10 is placed on one side along the longitudinal direction as well as the one side of the thickness direction of the display unit 7. Only those pixels corresponding to the first display image 8 can be seen by the observer 10, but the second display image 9 cannot be substantially seen being interrupted by the parallax barrier formed on the surface of the display unit 7. On the other hand, the observer 11 is placed on the other side along the longitudinal direction as well as the one side of the thickness direction of the display unit 7. Only those pixels corresponding to the second display image 9 can be seen by the observer 11, but the first display image 8 cannot be substantially seen being interrupted by the parallax barrier.

Next, the parallax barrier will be described below.

In the flat panel type display, the combination between a pixel structure of the display and an optical element like a parallax lens causes a field of view in the display. One example of such a lens is a parallax barrier. The parallax barrier is a screen which has a plurality of transparent slits arranged in the longitudinal direction and divided by a plurality of opaque areas. The function of the parallax lens (the parallax barrier) is to restrict the emitting angle of the light passing through pixels within a predetermined range. This restriction of the emitting angle also defines the angle of view for a line of pixel disposed behind a corresponding transparent slit. The range of the angle of view is determined on the basis of a width of the pixel, and a distance between a plain where the pixel is disposed and a plain where the parallax lens is disposed. The line of pixel corresponding to each of plurality of transparent slits can be seen from a view window. The parallax barrier as described above can be used in embodiments of the present invention.

A single screen of the schematically illustrating constitution as described above makes it possible to offer different kinds of information and contents to the users on the right and left sides. If the first image source 1 is the same as the second image source 2, the one and other observers can share the same image in a customary manner, as a matter of course.

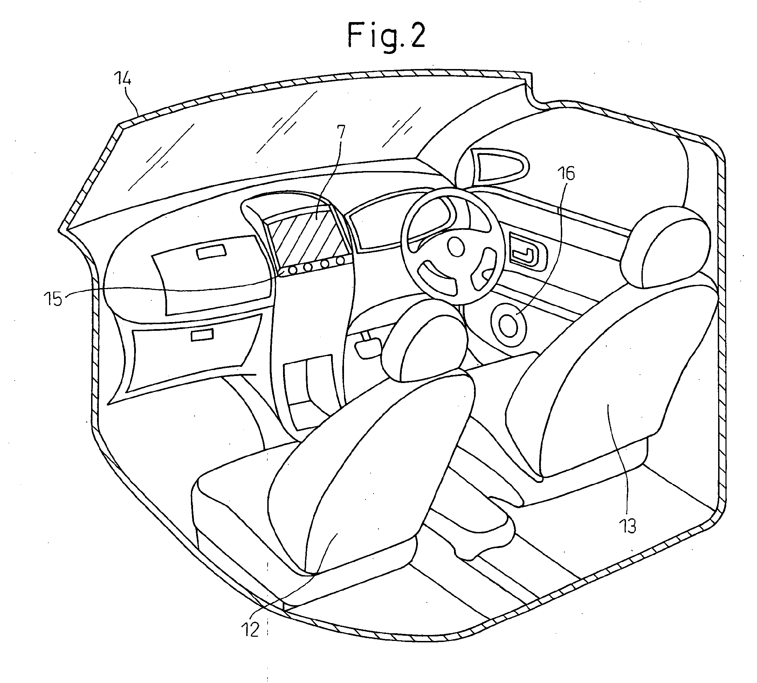

Fig. 2 is a perspective view illustrating an example of mounting the display device of the present invention on a vehicle. The display unit 7 of the display device is arranged in a dashboard portion nearly at the center of the vehicle in the width direction. A variety of operations for the display device 20 are executed by using a touch panel (not shown) or an operating unit 15, or by using an infrared-ray or radio remote controller (not shown). Speakers 16 are arranged in the doors of the vehicle to produce sounds and alarm sounds which are related to the display images.

The observer 11 of Fig. 1 sits on the driver's seat 13, and the observer 10 sits on the assistant driver's seat 12. The image on the display unit 7 that can be seen from the first viewing direction (from the side of the driver's seat) is, for example, an image of a map or the like of a car navigation device, and an image that can be seen from a second viewing direction (from the side of the assistant driver's seat) substantially simultaneously is, for example, a TV received image or a movie image of DVD. Therefore, the passenger on the assistant driver's seat 12 can enjoy watching the TV or DVD while the driver on the driver's seat 13 is assisted for his driving by the car navigation device. Besides, each image is displayed over the whole screen of, for example, 7 inches. Unlike the conventional multi-window display, therefore, the image size does not become small. Namely, the driver and the passenger are furnished with information and contents which are best suited for them as if there are provided independent and dedicated displays.

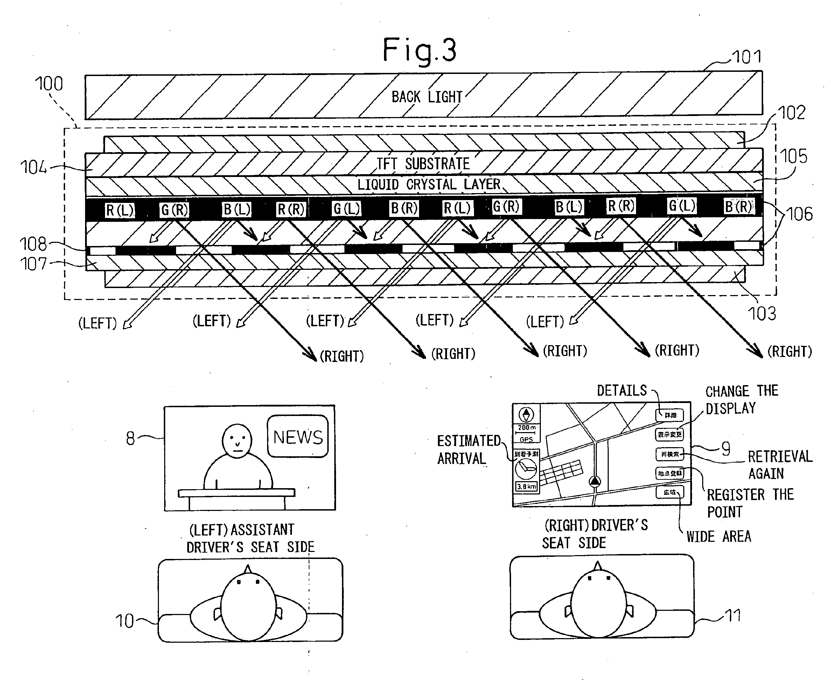

Fig. 3 is a schematic view illustrating the structure of the display unit 7 in cross section. The display unit 7 has a liquid crystal display panel 100 and a back light 101. The liquid crystal display panel 100 is constituted by a pair of substrates, a parallax barrier 108 which is arranged on the front surface of the substrate in the light-emitting direction (The parallax barrier 108 is also called a light-blocking section.), a glass substrate 107, and two pieces of polarizing plates 102 and 103 which are provided so as to sandwich the pair of substrates. Also, a liquid crystal layer 105 between a TFT substrate 104 and a color filter substrate 106 are sandwiched between the pair of substrates. The liquid crystal display panel 100 is arranged being slightly separated away from the back light 101. The liquid crystal display panel 100 can have pixels of RGB (Red-Green-Blue) colors (three primary colors).

The pixels of the liquid crystal display panel 100 are divided into those for display on the left side (assistant driver's seat side) and for display on the right side (driver's seat side), and are controlled for display. The pixels for display on the left side (assistant driver's seat side) are prevented by the parallax barrier 108 from offering display to the right side (driver's seat side), and can be seen only from the left side (assistant driver's seat side). On the other hand, the pixels for display on the right side (driver's seat side) are prevented by the parallax barrier 108 from offering display to the left side (assistant driver's seat side), and can be seen only from the right side (driver's seat side). Thus, different displays can be offered to the driver and to the passenger. That is, the driver is furnished with map information of navigation while the passenger can watch a movie.

Upon changing the parallax barrier 108 and the constitution of pixels of the liquid crystal display panel, further, it becomes possible to fabricate a constitution that displays different images in a plurality of directions such as in three directions. Further, the parallax barrier itself may be constituted by using a liquid crystal shutter that can be electrically driven to vary the visual field angle.

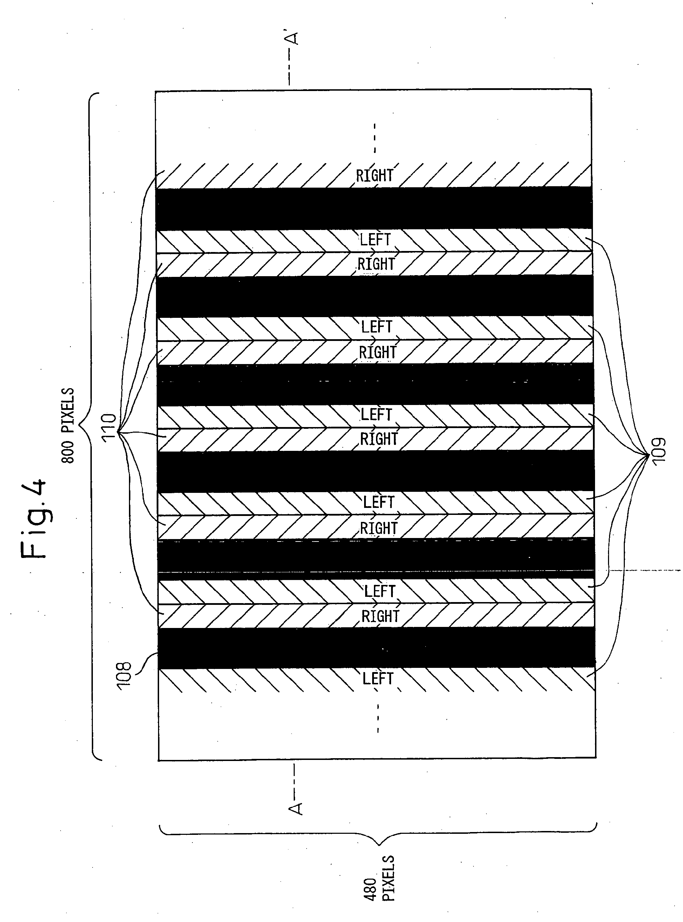

Fig. 4 is a schematic front view illustrating the relation among pixels for display on the left side, pixels for display on the right side, and the parallax barrier 108. Fig. 3 is a sectional view along A-A of Fig. 4. Figs. 3 and 4 illustrate a portion of the liquid crystal display panel 100 in which 800 pixels are arranged in the longitudinal (width) direction and 480 pixels are arranged in the transverse (length) direction. The pixels 109 for display on the left side and the pixels 110 for display on the right side are grouped in the transverse direction, and are alternately arranged in the longitudinal direction. The parallax barriers 108 are arranged maintaining a distance in the longitudinal direction and remain uniform in the transverse direction. Therefore, if the display unit 7 is viewed from the left side, the parallax barriers 108 conceal the pixels 110 for the right side, and the pixels 109 for the left side can be seen. If viewed from the right side, the parallax barriers 108 conceal the pixels 109 for the left side, and the pixels 110 for the right side can be seen.

If the display unit 7 is viewed from near the front which is vertical to the surface of the display unit 7, both the pixels 109 for the left side and the pixels 110 for the right side can be seen and, hence, the display image on the left side and the display image on the right side can be seen being substantially overlapped one upon the other. Here, the pixels 109 for the left side and the pixels 110 for the right side alternately arranged in Fig. 4 have colors RGB as shown in Fig. 3. However, each group may be constituted by a single color in the longitudinal direction like column R, column G or column B, or may be constituted as a column of a mixture of RGB.

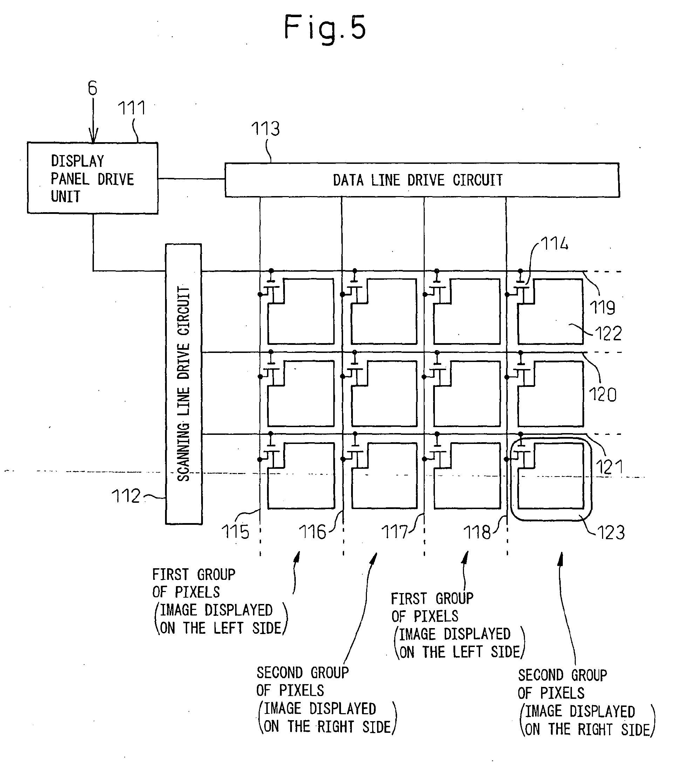

Fig. 5 is a circuit diagram schematically illustrating a TFT substrate 104. The TFT substrate 104 includes a display panel drive unit 111, a scanning line drive circuit 112, a data line drive circuit 113, TFT elements 114, data lines 115-118, scanning lines 119-121, pixel electrodes 122, and sub-pixels 123. The sub-pixels 123 are formed in a plural number with each region surrounded by the data lines 115 to 118 and by the scanning lines 119 to 121 as a unit. Each sub-pixel includes a pixel electrode 122 for applying a voltage to the liquid crystal layer 105 and the TFT element 114 for switch-controlling the pixel electrode 122. The display panel drive unit 111 controls the timings for driving the scanning line drive circuit 112 and the data line drive circuit 113. The scanning line drive circuit 112 selectively scans the TFT elements 114, and the data line drive circuit 113 controls the voltage applied to the pixel electrodes 122.

Based on the synthetic data of the first picture data and the second image data or based on the first and second image data, the plurality of sub-pixels 123 transmit the first pixel data (for displaying an image on the left side) to the data lines 115 and 117, and transmit the second pixel data (for displaying an image on the right side) to the data lines 116 and 118, to thereby form a first group of pixels for displaying the first image and a second group of pixels for displaying the second image.

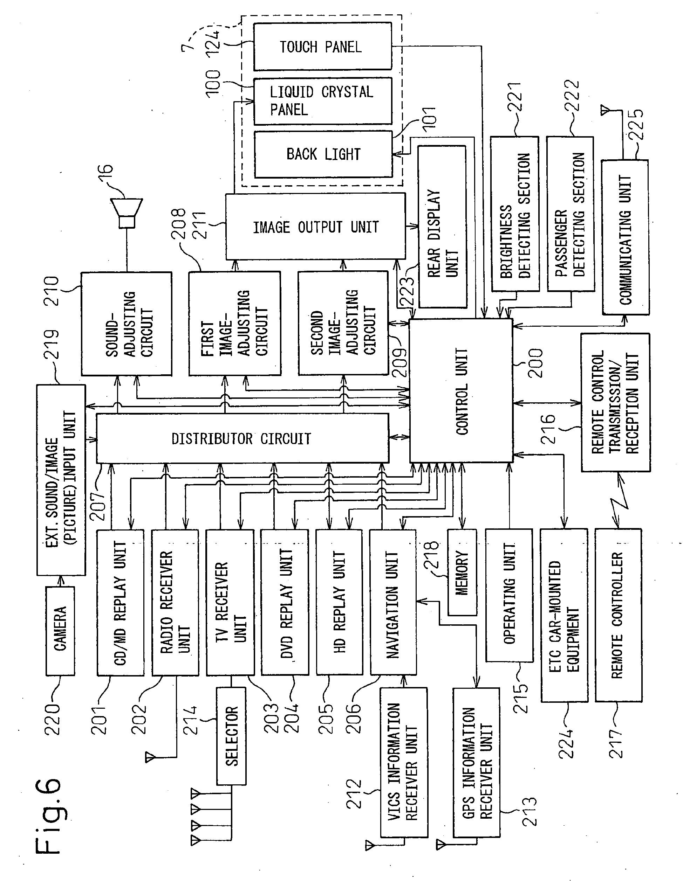

Fig. 6 is a block diagram schematically illustrating the display device according to the present invention which is applied to a so-called AVN (Audio Visual Navigation) composite device. The AVN composite device includes the display unit 7 having a touch panel 124, a control unit 200, a CD (Compact Disk) /MD (Mini Disk) replay unit 201, a radio receiver unit 202, a TV receiver unit 203, a DVD replay unit 204, a hard disk (HD) replay unit 205, a navigation unit 206, a distributor circuit 207, a first image-adjusting circuit 208, a second image-adjusting circuit 209, a sound-adjusting circuit 209, an image output unit 210, a VICS information receiver unit 212, a GPS (Global Positioning System) information receiver unit 213, a selector 214, an operating unit 215, a remote control transmission/reception unit 216, a remote controller 217, a memory 218, an external sound/image (picture) input unit 219, a camera 220, a brightness detecting unit 221, a passenger detecting unit 222, a rear display unit 223, an ETC (Electronic Toll Collection) car-mounted equipment 224, and a communicating unit 225.

The display unit 7 is constituted by the touch panel 124, liquid crystal display panel 100 and back light 101. As described above, the liquid crystal display panel 100 of the display unit 7 is capable of substantially simultaneously displaying an image which is seen from the first viewing direction or from the side of the driver's seat and an image which is seen from the second viewing direction or from the side of the assistant driver's seat. As the display unit 7, there can be used a flat panel display other than the liquid crystal display panel, such as an organic EL (Electro Luminescence) display panel, a plasma display panel, or a cold-cathode flat panel display.

The image data and the sound data from various sources are distributed via the distributor circuit 207, i.e., the image data are distributed to the first image-adjusting circuit 208 and to the second image-adjusting circuit 209, and the sound data are distributed to the sound-adjusting circuit 210. The various sources are CD/MD replay unit 201, radio receiver unit 202, TV receiver unit 203, DVD replay unit 204, HD replay unit 205 and navigation unit 206. The first and second image-adjusting circuits 208 and 209 adjust the brightness of the image, color tone and contrast, and the thus adjusted images are displayed on the display unit 7 through the image output unit 211. The sound-adjusting circuit 210 adjusts the distribution, sound volume and tone quality ' to each of the speakers, and the adjusted sound is output from the speakers 16.

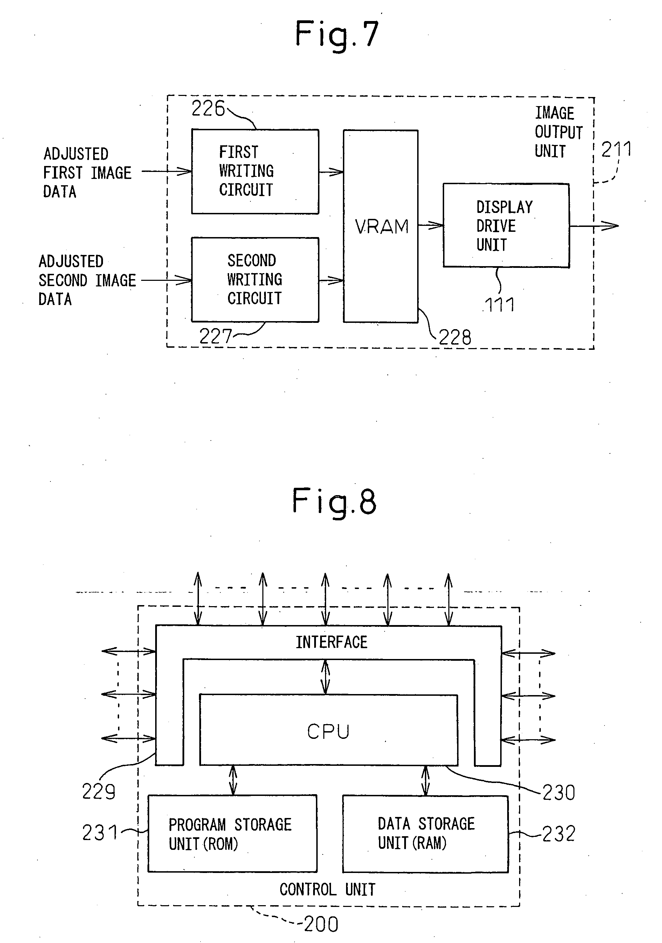

Fig. 7 is a block diagram schematically illustrating the image output unit 211. The image output unit 211 includes a first writing circuit 226, a second writing circuit 227, a VRAM (video RAM) 228 and a display drive unit 111. For example, the first writing circuit 226 writes, into the corresponding region in the VRAM 228, the image data corresponding to the columns of odd numbers among the image data adjusted by the first image-adjusting circuit 208, and the second writing circuit 227 writes, into the corresponding region in the VRAM 228, the image data corresponding to the columns of even numbers among the image data adjusted by the second image-adjusting circuit 209.

The display drive unit 111 is a circuit for driving the liquid crystal display panel 100, and drives the corresponding pixels in the liquid crystal display panel 100 based on the image data (synthetic data of the first image data and the second image data) held in the VRAM 228. Into the VRAM 228 are written the image data obtained by synthesizing the first image data and the second image data so as to be corresponded to the image for multi-view display. Therefore, only one drive circuit may be employed, and its operation is the same as the operation of a drive circuit in an ordinary liquid crystal display device. As another constitution, further, there can be contrived to use a first display panel drive circuit and a second display panel drive circuit for driving the corresponding pixels in the liquid crystal display panel based on the respective image data without synthesizing the first image data and the second image data together. The control unit 200 corresponds to a light-blocking position varying portion.

The various sources shown in Fig. 6 will now be described. When the HD replay unit 205 is selected, music data such as MP 3 (MPEG Audio Layer 3) file, image data such as JPEG file, that are stored in the hard disk, and menu display and image data for selecting the music data and the image data that are to be replayed, can be displayed on the display unit 7.

The navigation unit 206 includes a map data information unit storing map information used for the navigation, obtains information from the VICS (Vehicle Information and Communication System) information receiver unit 212 and the GPS information receiver unit 213, forms an image for navigation operation, and outputs it. The TV receiver unit 203 receives, from the antenna, analog TV broadcast waves and digital TV broadcast waves through the selector 214, and outputs the image included therein.

Fig. 8 is a block diagram schematically illustrating the control unit 200. The control unit 200 controls the distributor circuit 207 and various sources, and has the selected two sources or one source displayed. The control unit 200 further displays, on the display unit 7, an operation menu for controlling various sources. The control unit 200 is constituted by a microprocessor or the like and includes a CPU (Central Processing Unit), a program storage unit 231, a data storage unit 232 and an input-output interface 229.

The CPU 230 generally controls various unit and circuits in the display device via the input-output interface 229. The program storage unit 231 is constituted by a ROM (Read Only Memory) for storing various programs necessary for operating the display device 20. The data storage unit 232 is constituted by a RAM (Random Access Memory) for holding various data. The ROM and RAM may be those incorporated in the CPU or those provided on the outer side thereof. Further, the ROM may be an electrically rewritable nonvolatile memory such as a flash memory.

The user may operate the above-mentioned various sources by using a touch panel 124 attached to the surface of the display unit 7, by using the switches provided in the periphery of the display unit 7, or by effecting the input operation or selection operation such as sound recognition through an operating unit 215. Alternatively, the input or selection operation may be executed by using the remote controller 217 via the remote control transmission/reception unit 216. The control unit 200 executes the control operation inclusive of the control of various sources according to the operation through the touch panel 14 and the operating unit 215. Further, the control unit 200 controls the sound volumes of the speakers 16 provided in a plural number in the vehicle as shown in Fig. 2 by using the sound-adjusting circuit 210. The control unit 200 further works to store various setpoint data such as the image quality setpoint data, program and vehicle data in the memory 218.

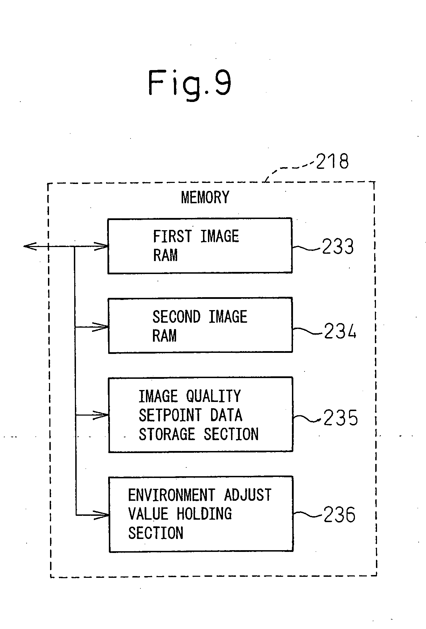

Fig. 9 is a block diagram schematically illustrating the memory 218. The memory 218 includes a first image RAM 233, a second image RAM 234, an image quality setpoint data storage section 235 and an environment adjust value holding section 236. The first image RAM 233 can be written into an adjust value of image qualities of the first image set by the user, and the second image RAM 234 can be written into an adjust value of image qualities of the second image set by the user. To adjust the image qualities of the first image and the second image, the image quality setpoint data storage section 235 delectably stores image qualities adjust values of a plurality of steps as preset values for adjusting image qualities. The environment adjust value holding section 236 holds adjusting conditions for the image qualities of the first image and the second image against the surrounding environment. The image quality setpoint data storage section 235 and the environment adjust value holding section 236 are constituted by electrically rewritable nonvolatile memories such as flash memories or volatile memories backed up with a battery.

In another embodiment of the present invention, the image from, for example, the camera 220 for monitoring the rear view connected to the external voice/image input portion 219 may be displayed on the display portion 7. In addition to the camera 220 for monitoring the rear view, a video camera and a game machine or the like may be connected to the external voice/image input portion 219. The control unit 200 may vary the position of the sound based on the data detected by the brightness detecting unit 221 or detected by the passenger detecting unit 222. The brightness detecting unit 221 is, for example, constituted by light switch or optical sensor of the vehicle, and the passenger detecting unit 222 is, for example, constituted by pressure sensors.

The rear display unit 223 is provided for the rear seat of the vehicle, and displays the same image as the one displayed on the display unit 7, or displays either the image for the driver's seat or the image for the assistant driver's seat through the image output unit 211. Further, the rear display unit 223 displays either the image for the driver's seat or the image for the assistant driver's seat through the distributor circuit 207. The control unit 200 displays the fees, the recorded history of paying fees and the information as to route for the ETC gate from the ETC car-mounted equipment 250. The control unit 200 may further control the communicating unit 225 that wirelessly connects to a cell phone to display information related thereto.

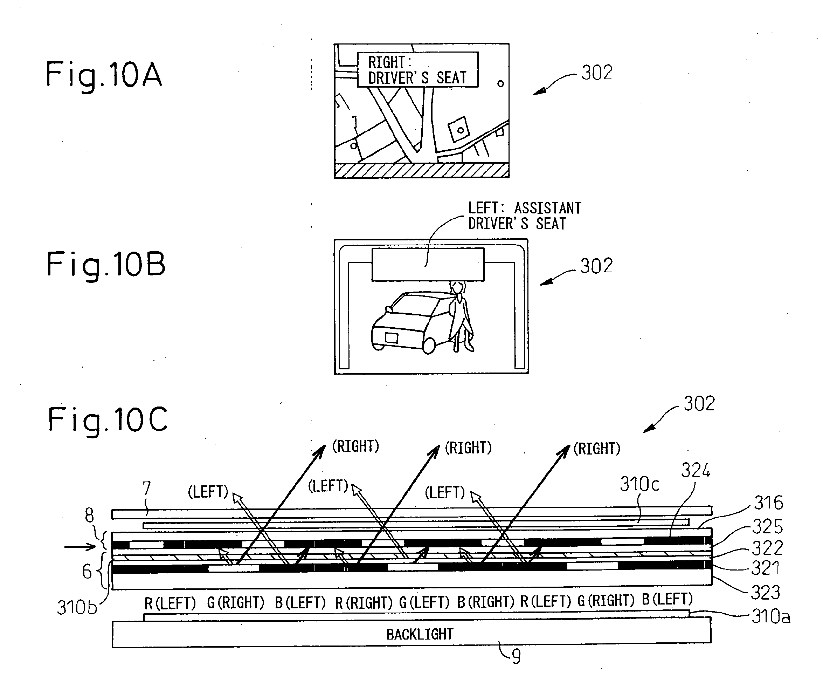

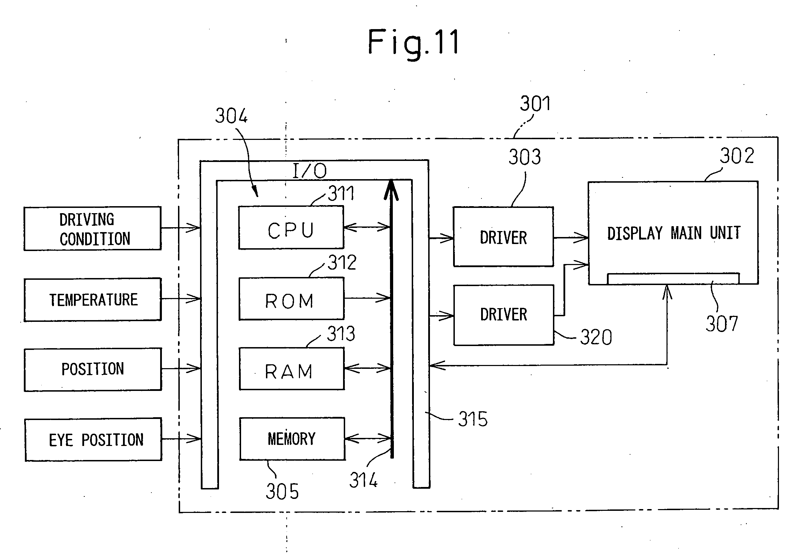

Fig. 10 shows a display device according to an embodiment of the present invention; more specifically, Fig. 10(A) is a diagram showing one example of an image output to the driver's seat side, Fig. 10(B) is a diagram showing one example of an image output to the assistant driver's seat side, and Fig. 10(C) is a cross-sectional view of an essential portion. Fig. 11 is a block diagram of a control system for the display device 301. The display device 301 of this embodiment is mounted in a vehicle. It will, however, be noted that the display device is not necessarily limited to automotive applications, but is also applicable for use with an electronic apparatus in other applications than automotive applications. The description hereinafter given includes a description of a light blocking position adjusting method.

The display device 301 includes a display main unit 302 for displaying images, drivers 303, a microcomputer 304, and a memory 305. The display main unit 302 (sometimes referred to simply as the display 302) is implemented using a liquid crystal display panel 306, a touch panel 307, a light-blocking panel 308, a backlight 309, and polarizers 310. The microcomputer 304 and the driver 303 for driving the pixels of the liquid crystal display panel 306 to display images thereon are contained, for example, in the display main unit 302. The microcomputer 304 includes a central processing unit (CPU) 311, a read-only memory (ROM) 312, and a random-access memory (RAM) 313. The CPU 311, ROM 312, and RAM 313 are electrically connected to an input/output interface 315 via a bus 314. The memory 305 which stores viewing angle adjustment values, viewable range adjustment values, etc. is connected to the CPU 311, etc. via the bus 314.

The display main unit 302 comprises the liquid crystal display panel 306 which is formed from a liquid crystal display device for displaying images, and the light-blocking panel 308 which is formed from a liquid crystal display device for controlling the direction of light by transmitting or blocking the light emerging from the pixels of the liquid crystal display panel 306. The liquid crystal display device (TFT-LCD) 321 is constructed by sandwiching a liquid crystal layer between two electrode substrates 322 and 323 each formed from a glass plate, and is disposed a certain distance away from the backlight 309 and polarizer 310 in the thickness direction of the panel. The light-blocking panel 308 is placed on the front of the liquid crystal display panel 306, i.e., on the light emerging side of the panel. Like the liquid crystal display panel 306, the light-blocking panel 308 is constructed by sandwiching a liquid crystal device 324 between two electrode substrates 316 and 323 each formed from a glass plate. The polarizers 310a, 310b, and 310c are respectively placed between the electrode substrate 323 and the backlight 309, between the electrode substrates 322 and 325, and on the outside of the electrode substrate 316. The light-blocking panel 308 with the polarizers 310b and 310c arranged on both sides thereof transmits or blocks the light, based on the same principle as that of the liquid crystal display device. With the glass substrates 316 and 322 and the liquid crystal device 324 working to control the transmission/blocking of light for each liquid crystal pixel, the light blocking position can be varied. Then, the emerging light blocking position of the light-blocking panel 308 is varied in accordance with a viewing angle adjusting signal and a viewable range adjusting signal input thereto.

The display elements in the liquid crystal display panel 306 are driven by the driver 303, while the display elements in the light-blocking panel 308 are driven by the driver 320. The viewing angle adjustment can be done by adjusting the light blocking position of the light-blocking panel 308, while the viewable range adjustment (sometimes referred to as the viewing range adjustment) can be done by adjusting the area of the light transmitting portion of the light-blocking panel 308.

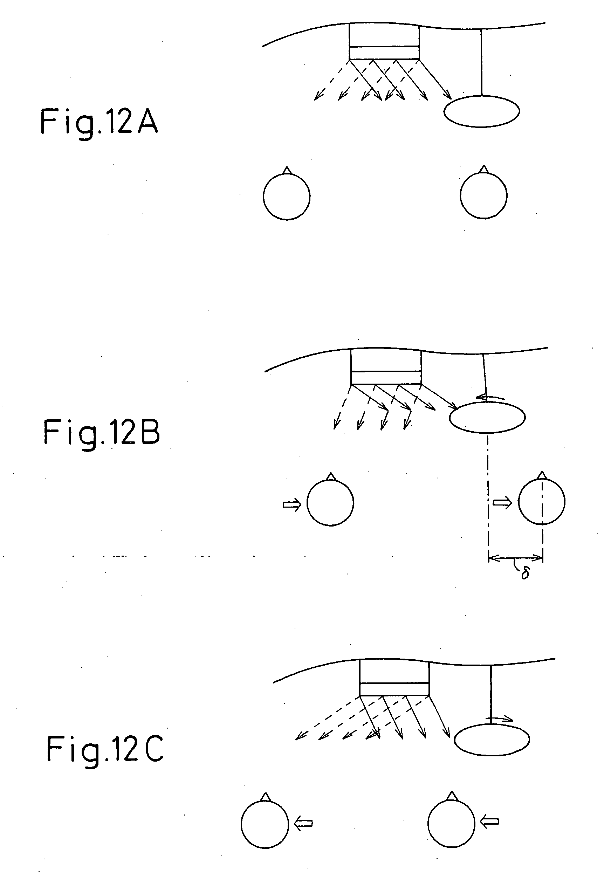

Fig. 12 is a schematic diagram showing the viewing angle adjustment of the display device 301 in a step-by-step manner. Fig. 12(A) is a diagram showing the condition before the viewing angle adjustment, Fig. 12(B) is a diagram showing a first step in the viewing angle adjustment, and Fig. 12(C) is a diagram showing a second step in the viewing angle adjustment. A description will be given below by also referring to Figs. 10 and 11. The viewing angle adjusting signal shows an adjustment value for the viewing angle for each direction in which each different image is to be output (hereinafter simply referred to as each direction). This viewing angle adjusting signal can be input, for example, by the viewer by operating the touch panel 307 which constitutes an input means and an information acquiring portion. The viewing angle adjusting signal corresponds to the "light emergence information." In a viewing angle adjustment value storage area within the memory 305, more than one adjustment value is stored for each direction. However, the number of adjustment values to be stored for each direction is not necessarily limited to more than one, but there can occur cases where only one adjustment value is stored for each direction in the viewing angle adjustment value storage area within the memory 305. Then, in response to the operation performed on the touch panel 307, the adjustment value for the adjustment target direction is read out of the memory 305 and the viewing angle adjusting signal is output to the driver 320. Further, when a registration operation is performed on the touch panel 307, the adjustment value corresponding to the viewing angle effective at the time of the operation is stored in the memory 305. A viewing angle preset function is implemented with these operations.

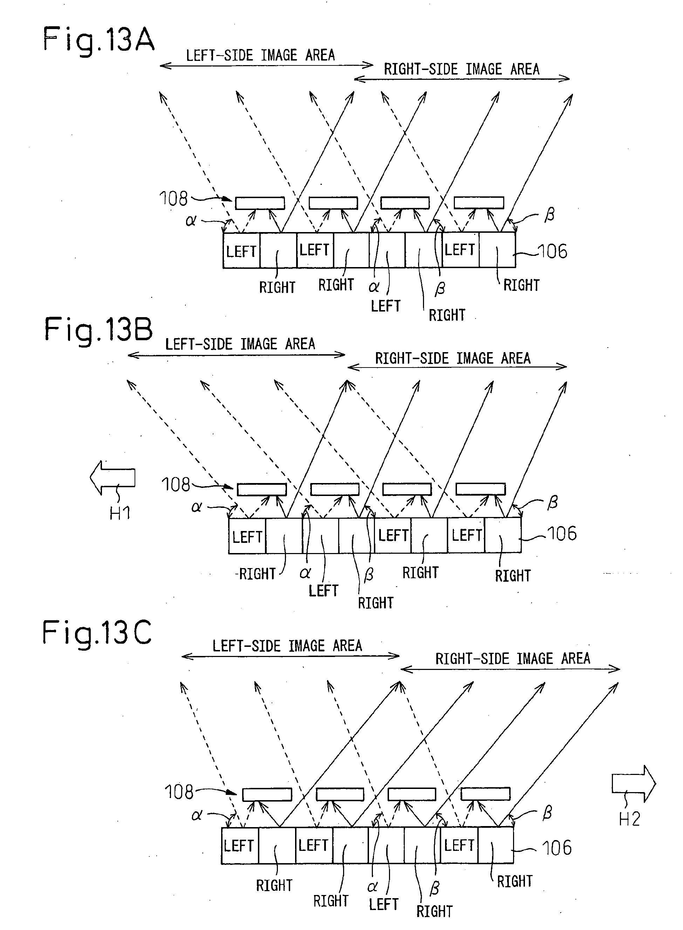

A description will be given how the viewing area is varied by varying the light blocking position of the light-blocking portion 108. Fig. 13 is a diagram showing the positional relationship of the light-blocking portion 108 relative to the color filter substrate 106; more specifically, Fig. 13(A) is a diagram showing the condition in which the light-blocking portion 108 is set in its reference position, Fig. 13(B) is a diagram showing the condition in which the light blocking position of the light-blocking portion 108 is shifted in one direction along the width of the vehicle, and Fig. 13(C) is a diagram showing the condition in which the light blocking position of the light-blocking portion 108 is shifted in the other direction along the width of the vehicle. As shown in Fig. 13(A), when the light-blocking portion 108 is in the reference position, its position is controlled relative to the color filter substrate 106 (sometimes referred to as the color filter 106) so that the viewing angle α (α is, for example, 60 degrees) of the image to be presented to the driver's seat side (left side) becomes equal to the viewing angle β (β is, for example, 60 degrees) of the image to be presented to the assistant driver's seat side (right side). The viewing angles a and β are the angles measured along the width of the vehicle in which the display portion 7 is mounted.

As shown in Fig. 13(B), based on the steering angle, steering direction, vehicle acceleration, etc. (hereinafter collectively referred to as the steering angle, etc.), the viewing angle α of the image to be presented to the driver's seat side (left side), as measured along the width of the vehicle, can be made smaller than the viewing angle β of the image to be presented to the assistant driver's seat side (right side). In other words, based on the steering angle, etc., the direction of the light emerging from the color filter substrate 106 is controlled so that the viewing angle β of the right-side image becomes larger than the viewing angle α of the left-side image. More specifically, the direction of the light emerging from the color filter 106 is controlled as described above, by shifting the light blocking position of the light-blocking portion 108 from its reference position by a predetermined small distance in one direction (indicated by arrow H1) along the width of the vehicle. If the position of the viewer's head is displaced to the left or right from its rest position, i.e., in the width direction of the vehicle, due to the centrifugal force acting on the vehicle, since the direction of the light emerging from the color filter 106 is controlled in accordance with the amount of the displacement, the viewing areas for both the driver's seat and the assistant driver's seat can be properly maintained.

As shown in Fig. 13(C), based on the steering angle, etc., the viewing angle β of the image to be presented to the assistant driver's seat side (right side), as measured along the width of the vehicle, can be made smaller than the viewing angle α of the image to be presented to the driver's seat side (left side). In other words, the direction of the light emerging from the color filter 106 is controlled so that the viewing angle α of the left-side image becomes larger than the viewing angle β of the right-side image. More specifically, the direction of the light emerging from the display portion 7 is controlled as described above, by shifting the light blocking position of the light-blocking portion 108 from its reference position by a predetermined small distance in the other direction (indicated by arrow H2) along the width of the vehicle. Further, if the position of the viewer's head is displaced to the left or right from its rest position due to the centrifugal force acting on the vehicle, since the direction of the light emerging from the color filter 106 is controlled in accordance with the amount of the displacement, the viewing areas for both the driver's seat and the assistant driver's seat can be properly maintained.

As described above, as the light-blocking portion 108 controls the direction of the light emerging from the color filter 106 so that the viewing angle α of the driver's seat side image and the viewing angle β of the assistant driver's seat side image differ from each other, it becomes possible to appropriately set the crosstalk area (the area where both images are visible). For example, when the direction of the light emerging from the color filter 106 is controlled so that the viewing angle β of the assistant driver's seat side (right-side) image becomes larger than the viewing angle α of the driver's seat side (left-side) image, as shown in Fig. 13(B), the viewer seated in the assistant driver's seat, and having greater freedom of movement than the driver's seat whose body is substantially restrained during driving of the vehicle, can be prevented from easily moving into the crosstalk area (the area where both images are visible). On the other hand, when the direction of the light emerging from the color filter 106 is controlled so that the viewing angle α of the driver's seat side (left-side) image the becomes larger than the viewing angle β of the assistant driver's seat side (right-side) image, as shown in Fig. 13(C), it becomes difficult for the driver seated in the driver seat to see the assistant driver's seat side (left-side) image, thus effectively preventing an image, not intended for the driver during driving (for example, a DVD image displayed for viewing by the assistant driver's seat (left side)), from becoming easily visible from the driver's seat side (right side).

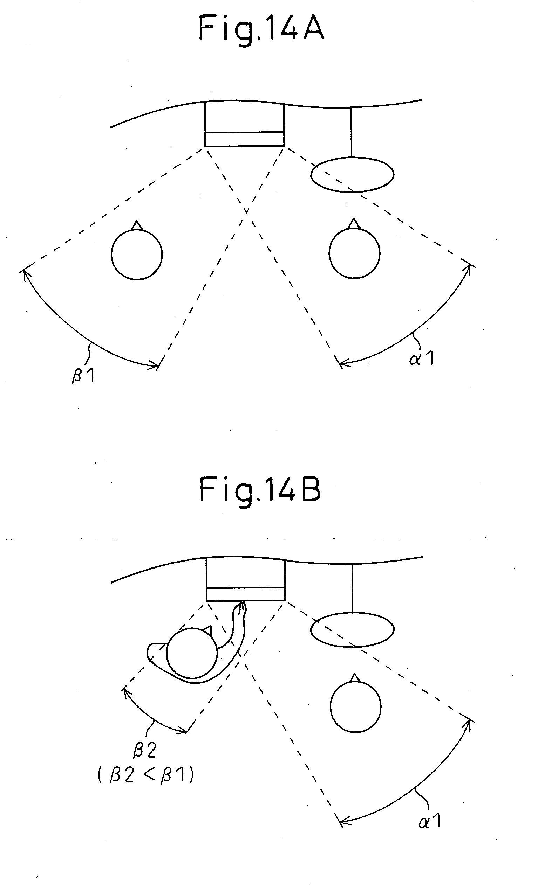

The touch panel 307 also functions as a viewing angle adjusting switch. The viewing angle adjusting switch is a switch for adjusting the viewing angle, and is configured to be able to issue an instruction to shift the viewing angle to the left or right for each of the images presented in the respective directions. The display device 301 further includes an adjustment image displaying means and an adjustment value displaying means (an adjustment value displaying portion). Of these, the adjustment image displaying means displays an adjustment image on the display 302 while the viewing angle adjustment is being made on the touch panel 307, the adjustment image being, for example, an image that presents a view as would be seen from the viewing angle direction when the viewing angle is adjusted properly. Such adjustment images are stored in the memory 305. On the other hand, the adjustment value displaying means displays an image that shows the adjustment value on the display 302 during the viewing angle adjustment. The image that shows the adjustment value includes, for example, a level meter, a pie chart, a vector display, or the like, whose value increases or decreases as the adjustment value is increased or decreased. However, the image is not necessarily limited to any of these specific images. The display device 301 further includes a viewable range adjusting means. During the adjustment of the viewing angle, the viewable range adjusting means reduces the viewable range (angle range) within which an intended image is viewable (see Fig. 14).

Fig. 14 is a schematic diagram showing the viewable range (angle range) adjustment of the display device 301 in a step-by-step manner; more specifically; Fig. 14 (A) is a diagram showing the condition before the viewable range adjustment is made, and Fig. 14(B) is a diagram showing the condition in which the viewable range adjustment is being made. In the figures, the respective viewable ranges are denoted by α1, β1, and β2. A description will be given below by also referring to Figs. 10 and 11. The viewable range adjusting signal is a signal that indicates the viewable range (angle range) within which an intended image is viewable. The viewable range adjusting signal shows an adjustment value for the viewable range for each direction. This viewable range adjusting signal can be input, for example, by the viewer by operating the touch panel 307. In a viewable range adjustment value storage area within the memory 305, more than one adjustment value is stored for each direction. However, the number of adjustment values to be stored for each direction is not necessarily limited to more than one, but there can occur cases where only one adjustment value is stored for each direction in the viewable range adjustment value storage area within the memory 305. The display device also includes a viewable range preset function, similar to the viewing angle preset function, which is implemented using the memory 305 and the touch panel 307.

The touch panel 307 also includes a function as a viewable range adjusting switch. The viewable range adjusting switch is a switch for adjusting the viewable range, and is configured to be able to issue an instruction to increase or reduce the viewable range for each of the images presented in the respective directions. The display device 301 further includes a function for displaying on the display 302 an adjustment image that facilitates the adjustment during the viewable range adjustment. Such adjustment images are stored in the memory 305. The adjustment value displaying means displays an image that shows the adjustment value on the display 302 while the adjustment is being made using the viewable range adjusting switch. The image that shows the adjustment value includes, for example, a level meter, a pie chart, a vector display, or the like, whose value increases or decreases as the adjustment value is increased or decreased. However, the image is not necessarily limited to any of these specific images.

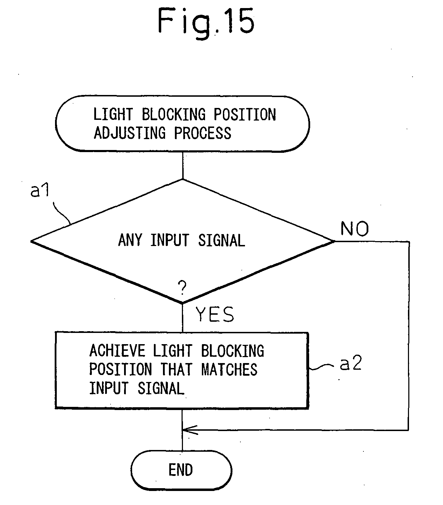

Fig. 15 is a flowchart outlining a light blocking position adjusting process according to the embodiment of the present invention. This light blocking position adjusting process is performed by the CPU 311. This process is repeatedly performed during the operation of the display device 301. In step a1, the presence or absence of an input signal is checked. If there is an input signal, the process proceeds to step a2, but if there is no input signal, the process is terminated. The input signal here is any one of preset signals that involve the execution of the viewing angle adjustment, etc., such as a signal occurring due to the depression of the viewing angle adjusting switch or the viewable range adjusting switch on the touch panel 307, or a driving condition signal indicating the driving condition of the vehicle. The driving condition signal is implemented by a sensor that detects the driving condition of the vehicle, for example, a gyro, an acceleration sensor, a vehicle speed detecting means, etc. mounted in the vehicle. Other possible inputs include a temperature signal (from a thermocouple device) that indicates the ambient temperature of the display device 301 and a position signal that indicates a viewer's position (for example, the position of the viewer is detected based on the seat position or by using a CCD camera mounted inside the vehicle).

In step a2, the elements in the light-blocking panel 308 are controlled to achieve the light blocking position that matches the input signal. The element control pattern of the light-blocking panel 308 that matches the input is stored in the memory 305, and the individual elements are controlled based on this pattern data. How the control is performed in response to the vehicle condition will be described by way of example; that is, as shown in Figs. 12(B) and 12(C), when the vehicle is traveling around a curve, for example, the driver and the passenger are subjected to a centrifugal force such that their bodies are displaced by a certain amount (the amount of displacement "δ") in the width direction of the vehicle, compared with the case where the vehicle is traveling on a straight road. For a left curve, the adjustment value is determined so that, based on the amount of displacement, the viewing angle of the image to be presented to the driver is made sharper in the width direction of the vehicle than when the vehicle is traveling on a straight road as shown in Fig. 12(A). The adjustment value is read out of the memory based on the signal supplied from a sensor mounted in the vehicle. Then, the viewing angle of the image is controlled based on this adjustment value.

As shown in Fig. 12(C), for a right curve, the adjustment value is determined so that, based on the amount of displacement, the viewing angle of the image to be presented to the driver is made less sharp in the width direction of the vehicle than when the vehicle is traveling on a straight road as shown in Fig. 12(A). At the same time, the adjustment value is determined so that the viewing angle of the image to be presented to the passenger is made sharper than when the vehicle is traveling on a straight road, and the adjustment is made based on the adjustment value. Further, when the vehicle accelerates rapidly or stops suddenly, the driver and the passenger are subjected to a force such as an inertial force such that their bodies are displaced in a backward or forward direction, respectively; in such cases also, the adjustment value for the viewing angle in each direction may be determined in accordance with the amount of the displacement. After the emerging light blocking position of the light-blocking portion has been varied in step a2 in accordance with the input signal, the process is terminated.

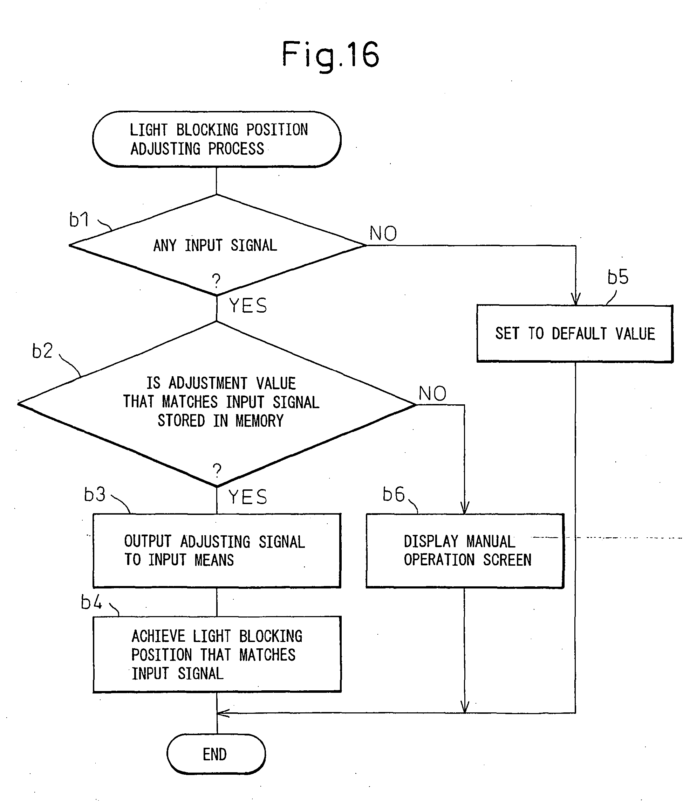

Fig. 16 is a flowchart showing a light blocking position adjusting process according to the embodiment of the present invention. This light blocking position adjusting process is performed by the CPU 311. This process is started when an operation is performed by the operator to start the viewing angle (viewable range) adjustment. That is, the adjustment is performed only when the operator specifically desires to have the adjustment done, but the adjustment is not performed when it is not desired. In step b1, the presence or absence of an input signal relating to an adjustment value is checked; if there is such an input signal, the process proceeds to step b2, but if there is no such input signal, the process proceeds to step b5. In step b5, the adjustment value is set to a default value, after which the process is terminated.

In step b2, it is determined whether the adjustment value that matches the input signal is stored in the memory 305 and, if it is stored, the process proceeds to step b3; otherwise, the process proceeds to step b6. In step b6, an indication prompting the operator to perform a manual operation and the operation screen for that purpose are displayed, after which the process is terminated. In step b3, a signal representing the adjustment value that matches the input signal is read out of the memory 305, and the process proceeds to step b4. In step b4, the adjustment value read out of the memory 305 is supplied to the driver 320, after which the process is terminated.

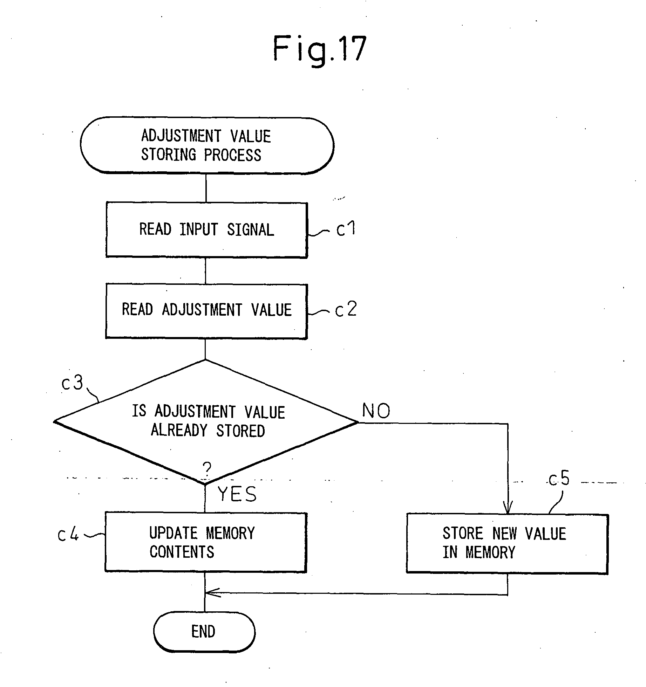

Fig. 17 is a flowchart showing an adjustment value storing process according to the embodiment of the present invention. This adjustment value storing process is performed by the CPU 311. This process is started when an adjustment value registration operation is performed by the operator (by operating the touch panel 307). In step c1, the input signal is read, and the process proceeds to step c2.

In step c2, the adjustment value of the light-blocking panel 308 is read, and the process proceeds to step c3. In step c3, it is determined whether the adjustment value that matches the input signal is stored and, if it is stored, the process proceeds to step c4; otherwise, the process proceeds to step c5. In step c4, the adjustment value for the same input signal stored in the memory 305 is updated with the new adjustment value, and the process is terminated. On the other hand, in step c5, the input signal is associated with the adjustment value and stored in an empty area within the memory 305, after which the process is terminated.

According to the display device 301 described above, as the liquid crystal light-transmission/blocking plate varies the emerging light blocking position of the light-blocking panel 308 in accordance with the viewing angle adjusting signal input to it, the following advantageous effect is offered. That is, as the light blocking position can not only be moved as a whole but also be changed finely in various patterns, optimum light blocking positions of the light-blocking panel 308 can be obtained for various viewing angle adjusting signals. As the viewing angle adjustment can be accomplished by varying the light blocking position of the light-blocking panel 308 placed on the front of the liquid crystal display panel 306 in accordance with the viewing angle adjusting signal entered via the input means, the adjustment can be made automatically in accordance with various conditions, for example, vehicle traveling conditions.

As the viewing angle or viewing range adjusting signal is a signal that indicates an adjustment value for each of the directions in which different images are output, the adjustment can be made independently for each of the images to be output in different directions. It also becomes possible to reduce crosstalk. Further, since the display device 301 is equipped with a preset means (preset portion) for the viewing angle or viewing range adjustment, the viewing angle and viewing range can be adjusted quickly and easily. In other words, once the adjustment value is stored in the memory 305, the emerging light blocking position of the light-blocking panel 308 is obtained uniquely in accordance with the adjustment value. As a result, the viewing angle and viewing range can be adjusted quickly and easily.

As a plurality of adjustment values are stored for each direction in the viewing angle and viewing range adjustment value storage areas within the memory 305, an optimum viewing angle and viewing range are set for the viewer located in each direction. Accordingly, the plurality of viewers located in the plurality of different directions can clearly view the different images intended for the respective viewers. When the adjustment values are stored for each direction in the viewing angle and viewing range adjustment value storage areas within the memory 305, the viewing angle and the viewing range are set for the viewer located in each particular direction. According to the display device 301, the light-transmission/blocking control can be accomplished using liquid crystal elements. Accordingly, compared with the prior art that performs the control by driving the slits using a driving source, not only can the structure be simplified, but the size of the display device can be reduced.

The viewer can manually adjust the viewing angle or viewing range by operating the touch panel 307. As the adjustment image is displayed during the viewing angle adjustment, the viewer can adjust the viewing angle easily and accurately while viewing the adjustment image. Further, as the image showing the adjustment value is displayed during the viewing angle or viewing range adjustment, the viewer can operate the viewing angle adjusting switch while checking the adjustment value. The viewer can thus easily store the adjustment value, which serves to enhance the reproducibility of the viewing angle or viewing range adjustment. By reducing the viewable range while adjusting the viewing angle or viewing range, the viewing angle or viewing range can be adjusted with high accuracy.

According to the display device 301, by inputting a vehicle driving condition signal, the light blocking position of the light-blocking panel 308 is varied so as to match the vehicle driving condition, and a proper viewing angle can thus be achieved. For example, the viewer need not move his head, etc. against the centrifugal or inertial force occurring due to the driving condition. This serves to alleviate the physical strain of the viewer. The viewer can thus view the intended image clearly and comfortably without being affected by the driving condition of the vehicle. Further, when a temperature signal is input that indicates the ambient temperature of the display device 301, the light blocking position of the light-blocking panel 308 can be compensated for the distortion occurring due to a change in ambient temperature. This enhances the accuracy of the viewing angle and viewing range adjustment. Furthermore, when a position signal indicating the position of the viewer is input using a CCD camera or the like, it becomes possible to identify the position of the viewer, and the viewing angle and the viewing range can be adjusted with high accuracy so as to match the position of the viewer. In the present invention, the term "image" includes at least either a still image or a moving image.

As an alternative embodiment of the present invention, an input means for inputting an eye position signal that indicates the positions of the left and right eyes of the viewer may be provided, and the liquid crystal transmission/blocking plate may be controlled to vary the light blocking position of the light-blocking panel 3.08 so that the viewer can view different images separately with his left and right eyes. According to this configuration, as the viewer can view different images separately with his left and right eyes, the viewer can view a stereoscopic image. Further, rather than dynamically changing the light blocking position of the light-blocking portion, the setting of the light-blocking portion may be fixed so as to be asymmetric between left and right at the time of mounting (at the time of shipment from the factory), for example, according to the vehicle. The present invention is not limited to automotive applications, but can be adapted for use in home applications.

Fig. 19 is a block diagram showing a portion of the configuration of a multiple view display device as one embodiment of the display device according to the present invention. The following description is given by taking as an example the case where the display device according to the present invention is applied as an automotive multiple view display device, but it will be appreciated that the display device according to the present invention can also be applied as a home-use display device or the like.

The display device 20 includes a control portion 200 which executes specified programs, a memory 218 which stores programs, data, etc., an image output portion 211 which creates a control signal to the display portion 7 by receiving an instruction from the control portion 200, a motor 21 as a driving means for turning the display portion 7 left and right, and a motor control circuit 254 which creates a control signal to the motor 21 by receiving an instruction from the control portion 200.

The control portion 200 receives an input signal from an external switch 250 such as a remote controller operated by the user. The control portion 200 is also configured to be able to receive input signals from a plurality of seating sensors 252 one each provided for each of the seats in the vehicle.

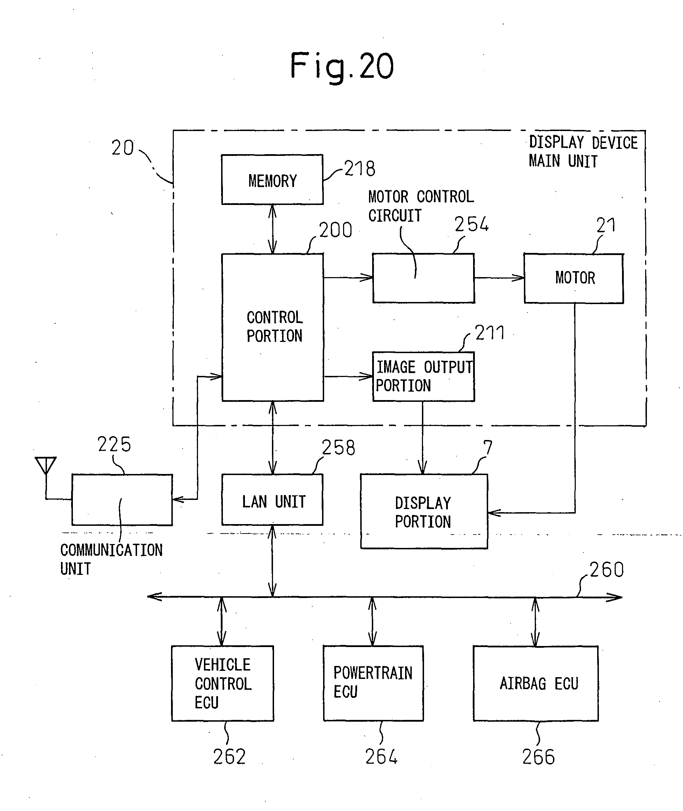

Fig. 20 is a block diagram showing a portion of the configuration of a multiple view display device as another embodiment of the display device according to the present invention. In Fig. 20, rather than taking input signals from the external switch 250 or seating sensors 252 as shown in Fig. 19, the control portion 200 is connected via a LAN unit 258 to an automotive LAN 260 constructed inside the vehicle 19, and is also connected via a communication unit 225 to the Internet.

In the example shown in Fig. 20, the control portion 200 is configured so that vehicle information (for example, 05 year model, model name XXX) concerning the vehicle in which the multiple view display device 20 is mounted can be acquired via the automotive LAN 260, for example, from a vehicle control ECU 262, a powertrain ECU 264, and an airbag ECU 266 connected to the automotive LAN 260. Further, the control portion 200 is configured to be able to connect to an external server such a car dealer server via the Internet by using the communication unit 225 and to acquire vehicle information concerning the vehicle in which the multiple view display device 20 is mounted. Here, the display device 20 may be equipped with both the LAN unit 258 and the communication unit 225 or only one of them.

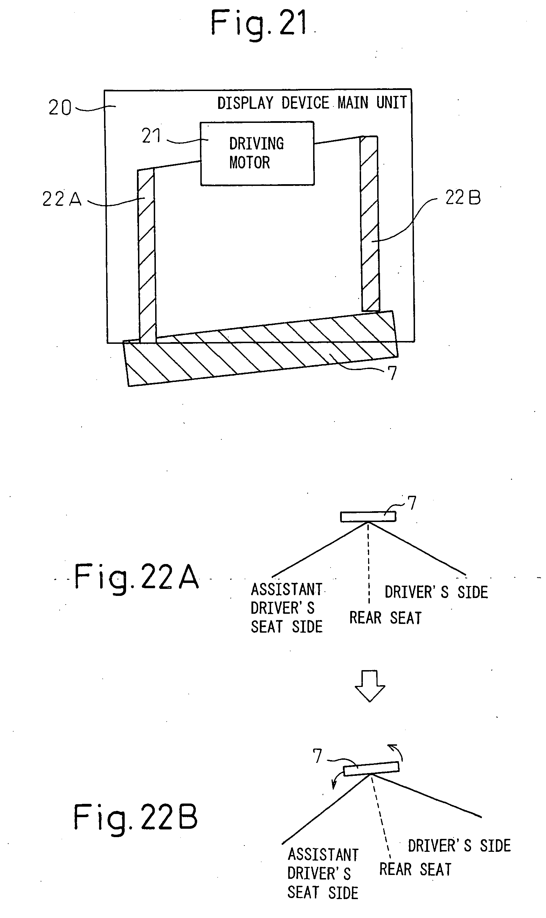

Fig. 21 is a diagram for explaining the structure that allows the display portion 7 to be turned left and right using the driving motor 21; the display device here is shown as viewed from the top. As shown, the rotational motion of the motor 21 is converted to the rectilinear motions of two drive shafts 22A and 22B. The display portion 7 swivels with one drive shaft moving forward (or backward) and the other drive shaft backward (or forward).

Fig. 22 is a diagram showing how the orientation of the display portion is changed relative to the seats in the vehicle. When the multiple view display device whose display portion 7 can be turned as described above is mounted in the vehicle, the orientation of the display portion 7 relative to the seats in the vehicle can be changed, for example, from the condition shown in Fig. 22(A) to the condition shown in Fig. 22(B).

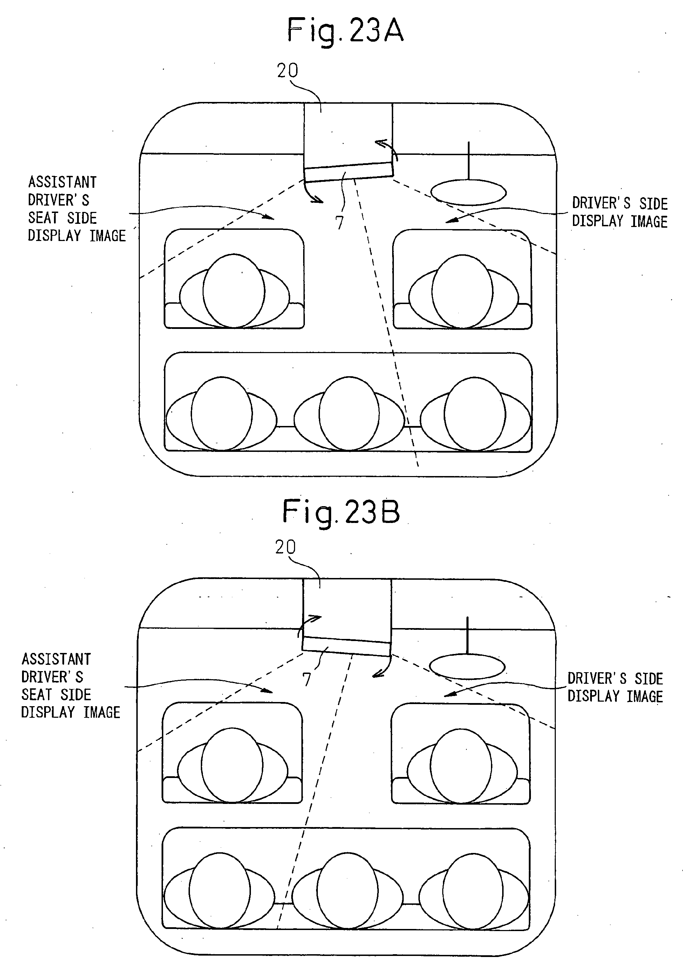

In the condition shown in Fig. 22(B), the relationship between the orientation of the display portion 7 and the seating positions in the vehicle is, for example, as shown in Fig. 23(A). As shown in Fig. 23(A), the orientation of the display portion 7 is adjusted so that when the display portion 7 is viewed from the position of the person sitting in the rear center seat, only one display image is visible to that person. This resolves the problem that both images become visible to the passenger sitting in the rear center seat. Furthermore, since the area where the assistant driver's seat side display image is viewable increases, the assistant driver's seat passenger, who has greater freedom of movement, can be prevented from easily moving into the crosstalk area (where both display images are simultaneously visible).

Fig. 23(B) shows the condition in which the orientation of the display portion 7 is adjusted in the opposite direction to that shown in Fig. 23(A). As shown, in the case of Fig. 23(B), the orientation of the display portion 7 is adjusted so that when the display portion 7 is viewed from the position of the person sitting in the rear center seat, only the other display image is visible to that person, contrary to the case of Fig. 23(A). This also resolves the problem that both images become visible to the passenger sitting in the rear center seat. Furthermore, as the area where the driver's seat side display image is viewable increases, it becomes extremely difficult for the driver to see the assistant driver's seat image, thus effectively preventing the image not intended for the driver during driving (for example, a DVD image presented to the assistant driver's seat side) from becoming easily visible from the driver's seat side.

In the multiple view display device of the present embodiment, the orientation adjustment of the display portion 7 is implemented by supporting a manual adjust mode and an automatic adjust mode. That is, in the manual adjust mode, the user operates the external switch 250 such as a remote controller 217, and the control portion 200 that received the signal controls the motor 21 accordingly. The proper orientation of the display portion varies depending on the vehicle type, seat position, etc., but the user can fine-adjust the orientation using the manual adjust mode.

Here, information concerning the orientation of the display portion 7 set by user operation is stored in the memory 218 under the control of the control portion 200 and, when starting up the display device after once turning it off, the control portion 200 performs processing to set up the position of the display portion 7 based on the information stored in the memory 218. That is, depending on the design of the display device, the display portion 7 may return to its normal position (the position not turned to the left or the right) when the display device is turned off. In this case, when the display device is turned on again, the position of the display portion 7 must be set up once again; this setup operation is automatically performed.

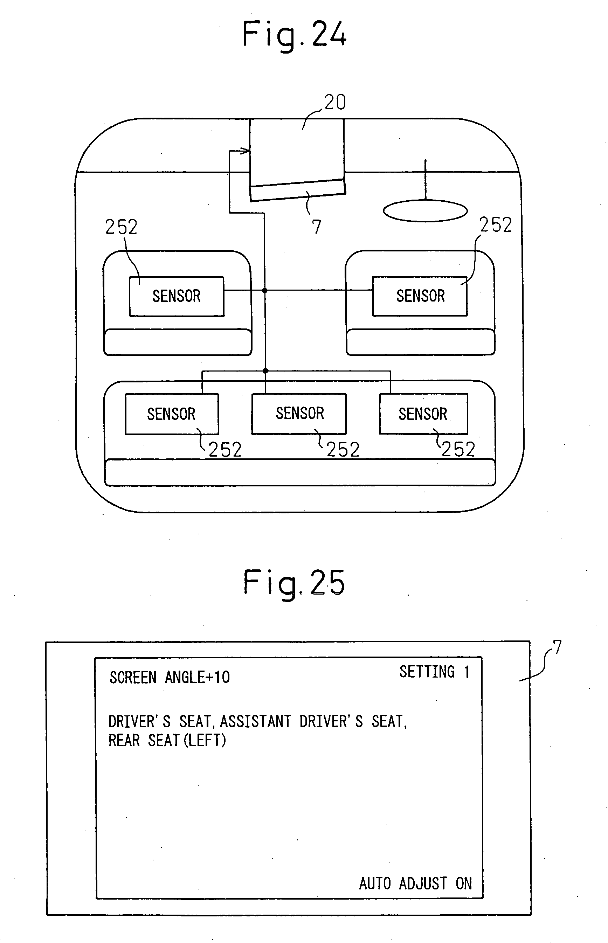

Next, the orientation adjustment of the display portion 7 in the automatic adjust mode will be described. Fig. 24 shows the arrangement of the plurality of seating sensors 252 installed in the respective seats. Each seating sensor 252 detects whether an occupant is seated in the seat, and sends the resulting signal to the control portion 200 of the display device main unit 20. The control portion 200 can thus detect the seating condition within the vehicle.

When the display device is set in the automatic adjust mode, the control portion 200 controls the motor 21 in accordance with the detected seating condition. In this way, the position of the display portion 7 is automatically set to the optimum orientation in accordance with the seating condition, thus saving the user the trouble of setting up the display orientation.

More specifically, the settings for the orientation of the display portion 7 for various seating conditions are stored in the form of a table in the memory 218. Then, by referring to the memory 218, the control portion 200 determines the orientation of the display portion 7 that matches the detected seating condition, and controls the motor 21 accordingly. The table stored in the memory 218.can be suitably modified by the user. This table may be constructed so as to define the orientation of the display portion 7 by also considering other parameters such as the vehicle type, seat positions, etc.

Further, in the present embodiment, the control portion 200 displays information concerning the orientation of the display portion on the screen of the display portion 7 when changing the orientation of the display portion 7 by controlling the motor 21. Fig. 25 is a diagram showing an example of the screen display produced when changing the orientation of the display portion. In this example, the information concerning the orientation of the display portion is displayed as "SCREEN ANGLE +10".

The designation "SETTING 1" indicates the number assigned to the setting for the detected seating condition. The designation "AUTO ADJUST ON" indicates that the adjustment is being made in the automatic adjust mode. As the set value for the orientation of the display portion is displayed in this way, in the manual adjust mode the assistant driver's seat or rear-seat passenger can indicate the best set value to the operator.

Further, in the present embodiment, the control portion 200 performs processing to display the seating condition on the screen of the display portion 7 when changing the orientation of the display portion 7 by controlling the motor 21. In the example of the display screen shown in Fig. 25, the seating condition is displayed as "DRIVER SEAT, FRONT PASSENGER SEAT, REAR SEAT (LEFT)", which indicates that occupants are seated in these seats. As the seating condition is displayed in this way, in the manual adjust mode the person who is setting up the display position can view the seating condition and can perform the setup operation easily.

Next, the orientation adjustment of the display portion 7 in another automatic adjust mode will be described. In the configuration of Fig. 20 where neither the external switch 250 nor the seating sensors 252 are provided, the control portion 200 can acquire via the LAN unit 258 or the communication unit 225 the vehicle information concerning the vehicle in which the multiple view display device is mounted, and can adjust the orientation of the display portion 7 based on the acquired vehicle information. In this case, it is preferable that a table in which the vehicle information is associated with proper angle information for the display portion 7 be stored in the memory 218. Using the acquired vehicle information, the control portion 200 can extract the proper angle information (15 degrees to the passenger seat side) for the display portion 7, and can adjust the orientation of the display portion 7 by controlling the motor 21 in accordance with the extracted angle information. As the mounting position of the multiple view display device and the arrangement of the driver's seat, assistant driver's seat, rear seat, etc. are determined in accordance with the vehicle, the optimum orientation of the display portion 7 can be determined in accordance with the vehicle. As fine adjustments often become necessary to achieve display orientation that matches the user's preference, as earlier described, the orientation adjustment of the display portion 7 based on the vehicle information may be done only at the time of initial setting (factory setting), and thereafter, the adjustment may be made in accordance with the example shown in Fig. 19.

The above embodiment has been constructed so that the orientation of the display portion 7 can be adjusted using the motor 21. However, in cases where there is little need to variably adjust the display orientation, the display portion 7 may be preadjusted fixedly in a left-right asymmetrically tilted position, for example, in accordance with the vehicle. The following describes three examples in which the display portion 7 is preadjusted fixedly in a left-right asymmetrically tilted position.

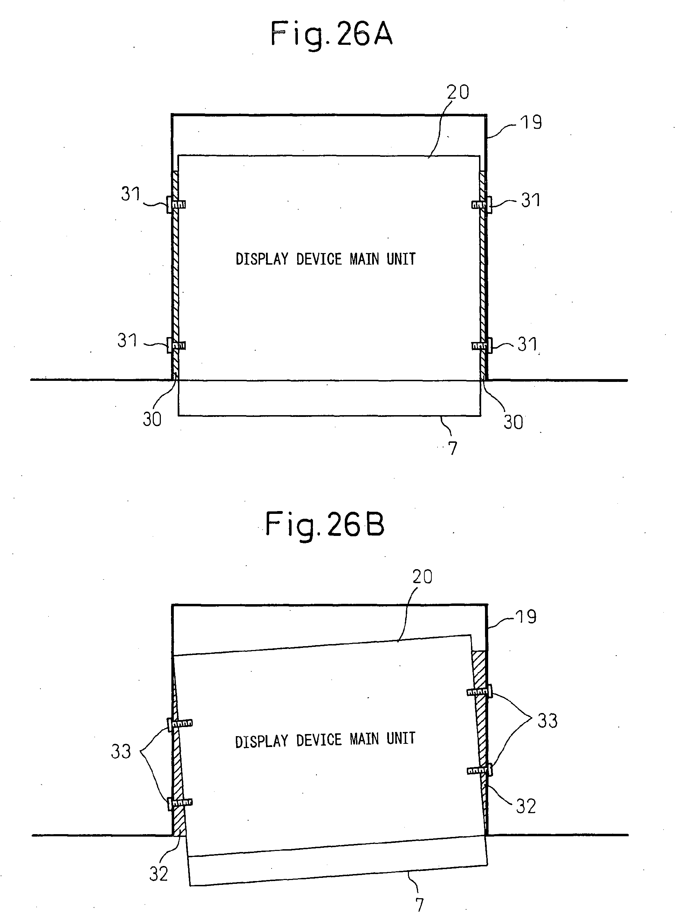

Fig. 26 is a diagram showing one example in which the display device 20 is mounted in a left-right asymmetric fashion in a vehicle. Fig. 26(A) shows an example in which the display device 20 is mounted in a left-right symmetric fashion in the vehicle 19, while Fig. 26(B) shows an example in which the display device 20 is mounted in a left-right asymmetric fashion in the vehicle 19. By fixing the display device 20 to the vehicle 19 with screws 33 using wedge-shaped mounting brackets 32, as shown in Fig. 26(B), the display portion 7 can be fixed in position tilted at a certain angle toward the driver's seat side. When the mounting brackets 32 are reversed right and left, the display portion 7 can be fixed in position tilted at a certain angle toward the assistant driver's seat side. By changing the wedge angle of each mounting bracket 32, the tilt angle of the display portion 7 can be changed. In this case, the wedge angle of the mounting bracket 32 itself may be made adjustable, or a plurality of mounting brackets 32 with different wedge angles may be prepared in advance.

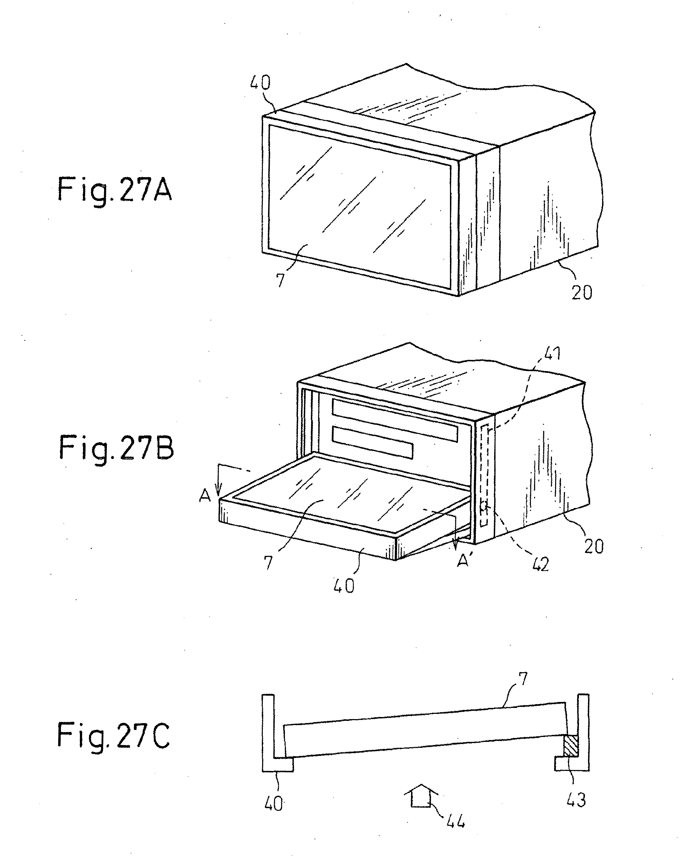

Fig. 27 is a diagram showing an example in which only the liquid crystal display panel 7 is mounted in a left-right asymmetric fashion in a frame member 40. In Fig. 27, the display device 20 itself is mounted substantially symmetrically in the vehicle 19, and only the orientation of the liquid crystal display panel 7 relative to the frame member 40 is adjusted. Fig. 27(A) shows the condition in which the frame member 40 is not lowered, Fig. 27(B) shows the condition in which the frame member 40 is lowered in a sliding manner, and Fig. 27(C) shows a cross section taken along A-A' in Fig. 27(B).

As shown in Fig. 27, the frame member 40 which holds the liquid crystal display panel 7 therein is constructed to be able to move up and down with respect to the display device 20. The up/down motion of the frame member 40 is accomplished with a sliding member 42 attached to the frame member 40 moving along a slit 41. Since the liquid crystal display panel 7 is mounted at a prescribed angle to the frame member 40 by interposing a cushion member 43, as shown in Fig. 27(C), it follows that, in the condition of Fig. 27(A), the liquid crystal display panel 7 is tilted at the prescribed angle (arrow 44 indicates the direction from which the user views the display portion 7). In the case of Fig. 27, the liquid crystal display panel 7 is mounted at the prescribed angle tilted toward the driver's seat side. Here, by attaching the cushion member 43 to a position opposite to that shown in Fig. 27(C), the liquid crystal display panel 7 can be mounted so as to tilt toward the assistant driver's seat side. It is also possible to adjust the tilt angle of the liquid crystal display panel 7 by adjusting the thickness, position, etc. of the cushion member.

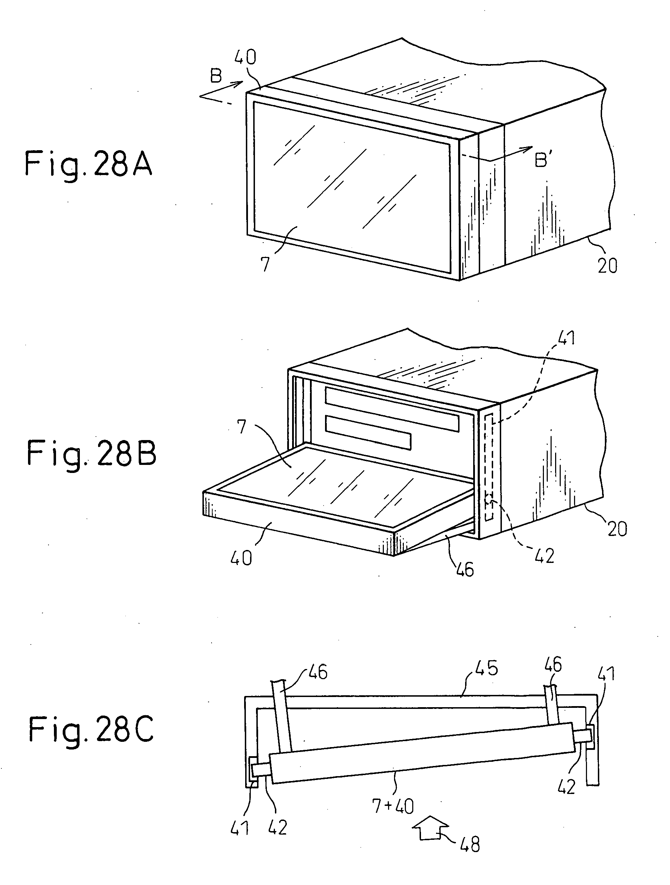

Fig. 28 is a diagram showing an example in which the liquid crystal display panel 7 and the frame member 40 are mounted in a left-right asymmetric fashion in a slit frame 45. In Fig. 28, the display device 20 itself is mounted substantially symmetrically in the vehicle 19, and only the orientation of the liquid crystal display panel 7 and frame member 40 relative to the slit frame 45 is adjusted. Fig. 28(A) shows the condition in which the frame member 40 is not lowered, Fig. 28(B) shows the condition in which the frame member 40 is lowered in a sliding manner, and Fig. 28(C) shows a cross section taken along B-B' in Fig. 28(B).

As shown in Fig. 28, the frame member 40 which holds the liquid crystal display panel 7 therein is constructed to be able to move up and down with respect to the display device 20. The up/down motion of the frame member 40 is accomplished with the sliding member 42 attached to the frame member 40 moving along the slit 41 while the frame member 40 is being supported on a slide lever 46. The liquid crystal display panel 7 and the frame member 40 are mounted at a prescribed angle to the slit frame 45 by means of the sliding member 42 and the slit 41, as shown in Fig. 28(C). As a result, when the display device 20 is set in the display position, the liquid crystal display panel 7 is tilted at the prescribed angle (arrow 48 indicates the direction from which the user views the display portion 7). That is, the liquid crystal display panel 7 is, in effect, tilted at the prescribed angle.

In the case of Fig. 28, the liquid crystal display panel 7 is mounted at the prescribed angle tilted toward the driver's seat side but, by reversing the positions of the slits 41 right and left from those shown in Fig. 28(C), the liquid crystal display panel 7 can be mounted so as to tilt toward the assistant driver's seat side. It is also possible to adjust the tilt angle of the liquid crystal display panel 7 by adjusting the positions of the slits 41, the length of the sliding member 42, etc.

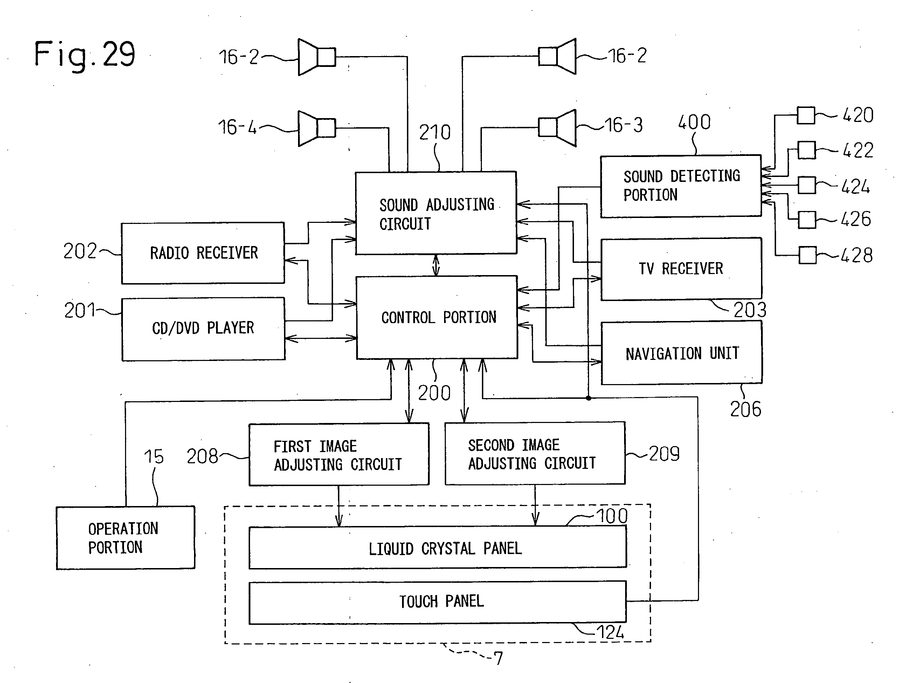

Fig. 29 is a block diagram showing, for purposes of explanation, only the characteristic portions of the display device according to the embodiment of the present invention. The following description of the invention is given based on an automotive display device, but it will be appreciated that the invention is not limited to automotive applications but can also be applied, for example, to a home-use display device or the like. In Fig. 29, the same component elements as those in Fig. 6 are designated by the same reference numerals. The configuration of Fig. 29 differs from that of Fig. 6 in that the sound adjusting circuit 210 is configured to be able to output sound from first to fourth speakers 16-1 to 16-4 mounted at various positions in the vehicle 198, and in that the control portion 200 is configured to be able to detect via a sound detecting portion 400 sound volumes from first to fifth detection sensors 420 to 428 mounted in the headrests of the respective seats in the vehicle 198.

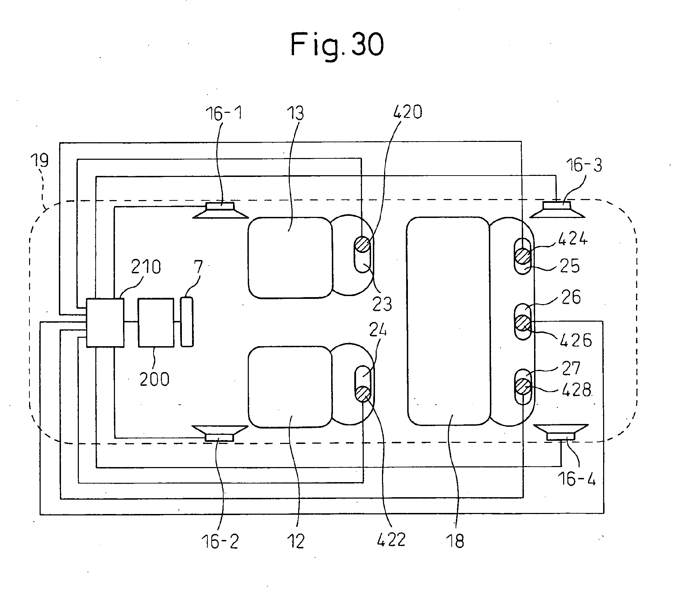

Fig. 30 shows an example of arrangement of the speakers and detection sensors. As shown in Fig. 30, in the vehicle 19, the first speaker 16-1 is mounted in the door on the driver's seat side, the second speaker 16-2 is mounted in the door on the assistant driver's seat side, the third speaker 16-3 is mounted on the right of the rear seat 18, and the fourth speaker 16-4 is mounted on the left of the rear seat 18. On the other hand, the first detection sensor 420 is mounted in the headrest 23 of the driver's seat 13, the second detection sensor 422 is mounted in the headrest 24 of the assistant driver's seat 12, the third detection sensor 424 is mounted in the headrest 25 of the rear seat 18, the fourth detection sensor 426 is mounted in the headrest 26 of the rear seat 18, and the fifth detection sensor 428 is mounted in the headrest 27 of the rear seat 18. The above arrangement example of the speakers and detection sensors is only illustrative of the invention, and various other arrangements are possible depending on the interior shape of the vehicle, the arrangement of the seats, etc.

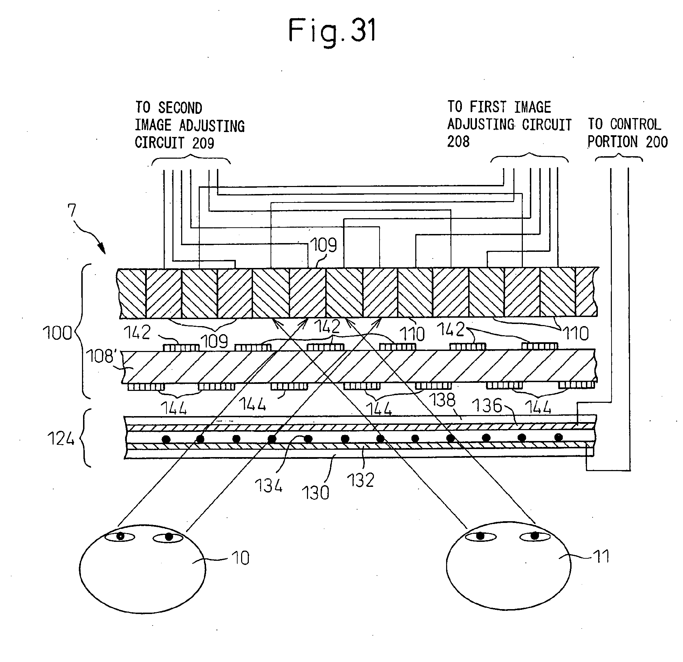

Fig. 31 is a schematic diagram showing a cross-sectional shape of the display portion 7. The touch panel 124 comprises a pair of flexible transparent insulating substrates 130 and 138, transparent electrodes 132 and 136 formed on the respective transparent insulating substrates, and dot spacers 134 arranged in a matrix pattern on the transparent electrode 132; when the users presses the transparent electrode substrate 130 thereby causing one of the dot spacers 134 to contact the transparent electrode 136, the position of the contact is detected by measuring the electrical resistance, and the input information is read by the control portion 200. The touch panel 124 is not limited to the above configuration, but other suitable types may be employed.

The liquid crystal panel 100 is vertically divided into a plurality of strip-like segments which alternate between left-side (assistant driver's seat side) display pixels 109 and right-side (driver's seat side) display pixels 110. All the left-side (assistant driver's seat side) display pixels 109 are driven and controlled by the first image adjusting circuit 208, and all the right-side (driver's seat side) display pixels 110 are driven and controlled by the second image adjusting circuit 209.

A parallax barrier 108' formed from polycarbonate or the like is disposed on the front surface side of the liquid crystal panel 100. Light-blocking bands 142 and 144 are formed in alternating fashion on the front and back surfaces of the parallax barrier 108'. In the example of Fig. 31, the parallax barrier 108' on which the light-blocking bands 142 and 144 are formed in alternating fashion has been used, but it is of course possible to use the parallax barrier 108 such as shown in Fig. 3.

Because of the action of the parallax barrier 108', the observer 11 located in the first viewing range containing the driver seat 13 can view only the image displayed by the right-side (driver's seat side) display pixels 110 as the image intended for viewing from the driver's seat side. On the other hand, because of the action of the parallax barrier 108', the observer 10 located in the second viewing range containing the front assistant driver's seat 12 can view only the image displayed by the left-side (assistant driver's seat side) display pixels 109 as the image intended for viewing from the assistant driver's seat side. Actually, each observer views an image displayed in alternate segments out of the plurality of segments into which one screen is divided but, as the width of each strip segment is very small, the observers can see different images from the driver's seat side and the assistant driver's seat side, respectively.

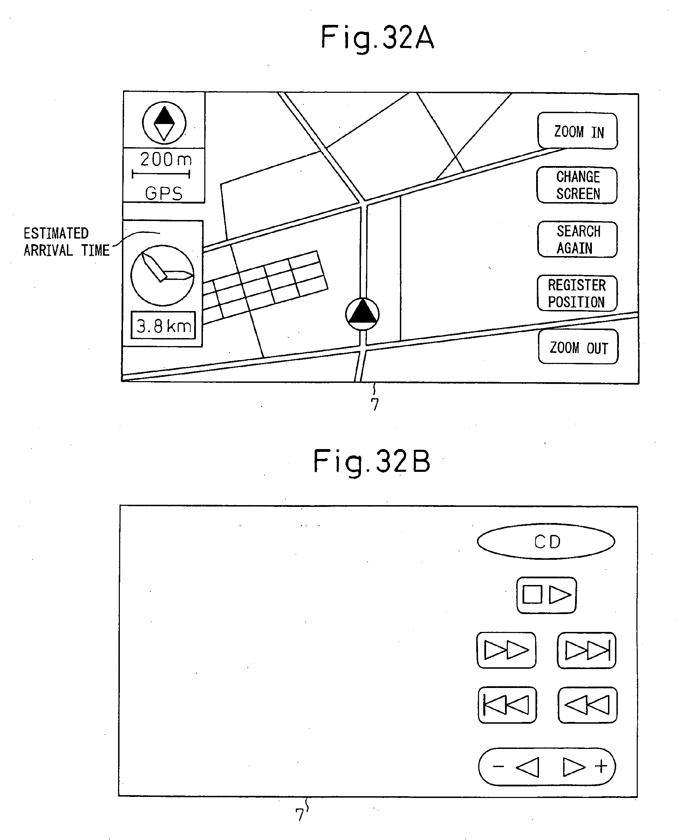

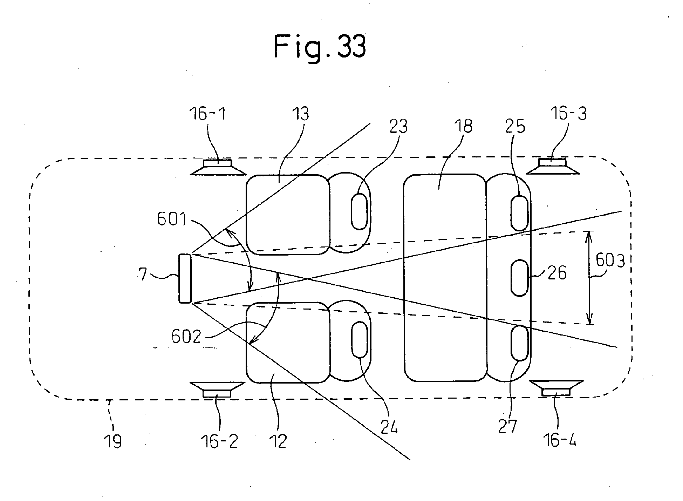

Fig. 32 shows a display image example, and Fig. 33 shows the viewing ranges and sound output ranges. Fig. 32(A) shows an example of a navigation display image as an example of the second display image (including a moving image and a still image) which is driven and controlled by the first image adjusting circuit 208 and which is viewable in the first viewing range (601 in Fig. 33) containing the driver's seat 13. On the other hand, Fig. 32(B) shows a display example of a CD operation screen image as an example of the first display image which is controlled by the second image adjusting circuit 209 and which is viewable in the second viewing range (602 in Fig. 33) containing the assistant driver's seat 12. As shown in Fig. 33, the occupant of the driver's seat 13 and the occupant of the rear seat 18 equipped with the headrest 25 can view the second display image since they are seated in the first viewing range, while the occupant of the assistant driver's seat 12 and the occupant of the rear seat 18 equipped with the headrest 27 can view the first display image since they are seated in the second viewing range. However, the occupant of the rear seat 18 equipped with the headrest 26 is located in the crosstalk area (603 in Fig. 33) and, therefore, can see some of each image.

In the example of Fig. 33, the second sound (sound for navigation) corresponding to the second display image is output from the first and third speakers 16-1 and 16-3, thus presenting good audible sound to the occupant of the driver's seat 13 and the occupant of the rear seat 18 equipped with the headrest 25. Further, in the example of Fig. 33, the first sound (music CD playback sound) corresponding to the first display image is output from the second and fourth speakers 16-2 and 16-4, thus presenting good audible sound to the occupant of the assistant driver's seat 12 and the occupant of the rear seat 18 equipped with the headrest 27. On the other hand, for the occupant of the rear seat 18 equipped with the headrest 26, who is located in the crosstalk area 603, the setting is made so that both the first sound and the second sound can be heard.

Figs. 32 and 33 have shown the case where the navigation display image and navigation sound are presented to the driver's seat side and the CD playback display image and CD playback sound to the passenger side, but it will be recognized that display images and/or sounds from all the sources (CD/DVD player 201, radio receiver 202, TV receiver 203, and navigation unit 206) connected to the display device can be selectively distributed between the driver side (first viewing area) and the assistant driver's seat side (second viewing area).

Further, display images, etc. from a certain TV broadcast channel and display images, etc. from another TV broadcast channel can also be selectively provided to the driver's seat side and the assistant driver's seat side, respectively. This is possible, for example, when the TV receiver is equipped with a plurality of tuners, or when TV recordings, etc. previously recorded are played back by the HD player 205.

It is also possible to play back two recording media of the same type, for example, display images. etc. recorded on the first DVD and display images. etc. recorded on the second DVD, and provide them selectively to the driver's seat side and the assistant driver's seat side, respectively. This is possible, for example, when a deck capable of playing back a plurality of recording media is mounted, or when display images previously reproduced from a DVD were recorded by the HD player 205.

Furthermore, different display images recorded on the same DVD (multi-angle recording, etc.) can be selectively provided to the driver's seat side and the assistant driver's seat side, respectively. This is possible, for example, when a deck equipped with a plurality of optical pickups is mounted, or when a deck is mounted that can reproduce two different display images from the same DVD while buffering the data by playing back the DVD at high speed, or when display images previously reproduced from a DVD were recorded by the HD player 205.

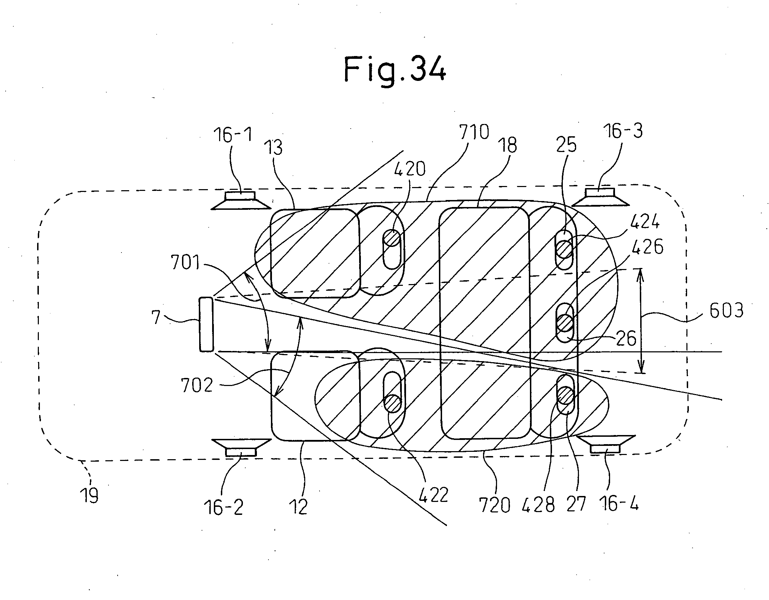

Fig. 34 shows an example in which changes are made to the viewing ranges and sound output ranges shown in Fig. 33. In the example of Fig. 34, the first viewing range 701 of the display portion 7 is changed so that the second display image can be provided effectively to the occupant of the rear seat 18 equipped with the headrest 26 as well as to the occupant of the driver's seat 13 and the occupant of the rear seat 18 equipped with the headrest 25. Further, in the example of Fig. 34, an arrangement is made so that the first display image can be provided effectively to the occupant of the front assistant driver's seat 12 and the occupant of the rear seat 18 equipped with the headrest 27, both located in the second viewing range 702 of the display portion 7. Accordingly, the occupant of the rear seat 18 equipped with the headrest 26, who is located in the crosstalk area 603 in Fig. 33, can now see the second display image clearly. Here, the parallax barrier 108' may be moved by means of a driving device such as a motor, and the viewing directions (ranges) may be changed by changing the position of the light-blocking bands 142 and 144 as the parallax barrier 108' moves.

Further, in the example of Fig. 34, the sound adjusting circuit 210 controls the sound outputs of the first to fourth speakers 16-1 to 16-4 based on the sound data from the first to fifth detection sensors 420 to 428 so that the first sound corresponding to the second display image is localized in the first area 710 where the occupant of the driver's seat 13 and the occupants of the rear seats 18 equipped with the headrests 25 and 26, respectively, are located. Likewise, the sound adjusting circuit 210 controls the sound outputs of the first to fourth speakers 16-1 to 16-4 based on the sound data from the first to fifth detection sensors 420 to 428 so that the second sound corresponding to the first display image is localized in the second area 720 where the occupant of the front assistant driver's seat 12 and the occupant of the rear seat 18 equipped with the headrest 27 are located. Accordingly, the occupant of the rear seat 18 equipped with the headrest 26, who is located in the crosstalk area 603 in Fig. 33, can now hear the first sound clearly.

To control the localization of the sound, the sound adjusting circuit 210 detects sound data, for example, from the fourth detection sensor 426 which is highly likely located closest to the head of the occupant of the rear seat 18 equipped with the headrest 26, and generates a canceling signal based on the detected sound data so as to cancel the data corresponding to the second sound contained in the sound data as noise, or controls the sound outputs of the first to fourth speakers 16-1 to 16-4 based on the sound volumes and delay times of the respective speakers.

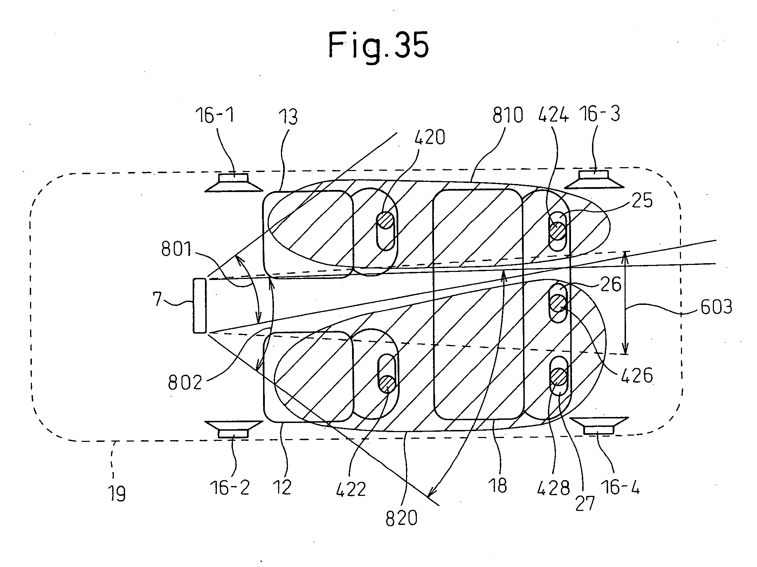

Fig. 35 shows another example in which changes are made to the viewing ranges and sound output ranges shown in Fig. 33. In the example of Fig. 35, the second viewing range 802 of the display portion 7 is changed so that the first display image can be provided effectively to the occupant of the rear seat 18 equipped with the headrest 26 as well as to the occupant of the front passenger seat 12 and the occupant of the rear seat 18 equipped with the headrest 27. Further, in the example of Fig. 35, an arrangement is made so that the second display image can be provided effectively to the occupant of the driver's seat 13 and the occupant of the rear seat 18 equipped with the headrest 25, both located in the first viewing range 801 of the display portion 7. Accordingly, the occupant of the rear seat 18 equipped with the headrest 26, who is located in the crosstalk area 603 in Fig. 33, can now view the first display image clearly.

Further, in the example of Fig. 35, the sound adjusting circuit 210 controls the sound outputs of the first to fourth speakers 16-1 to 16-4 based on the sound data from the first to fifth detection sensors 420 to 428 so that the first sound corresponding to the second display image is localized in the first area 810 where the occupant of the driver seat 13 and the occupant of the rear seat 18 equipped with the headrest 25 are located. Likewise, the sound adjusting circuit 210 controls the sound outputs of the first to fourth speakers 16-1 to 16-4 based on the sound data from the first to fifth detection sensors 420 to 428 so that the second sound corresponding to the first display image is localized in the second area 820 where the occupant of the assistant driver's seat 12 and the occupants of the rear seats 18 equipped with the headrests 26 and 27, respectively, are located. Accordingly, the occupant of the rear seat 18 equipped with the headrest 26, who is located in the crosstalk area 603 in Fig. 33, can now hear the second sound clearly.

To control the localization of the sound, the sound adjusting circuit 210 detects sound data, for example, from the fourth detection sensor 426 which is highly likely located closest to the head of the occupant of the rear seat 18 equipped with the headrest 26, and generates a canceling signal based on the detected sound data so as to cancel the data corresponding to the first sound contained in the sound data as noise, or controls the sound outputs of the first to fourth speakers 16-1 to 16-4 based on the sound volumes and delay times of the respective speakers.

Three examples of how the display images and their accompanying sounds are distributed within the vehicle 19 have been described with reference to Figs. 33 and 35. Here, a selector switch may be provided on the operation portion 15 so that the user can select the desired mode, and so that the display images and sound outputs can be changed in accordance with the user selection to achieve the selected one of the conditions shown in Figs. 33 to 35.

In Figs. 33 to 35, the display images have been controlled together with their accompanying sounds, but alternatively, a selector switch may be provided on the operation portion 15 so that only the display images or only the sounds may be controlled to achieve a desired one of the conditions shown in Figs. 33 to 35.

Further, a selector switch for setting the viewing range of the display portion 7, for example, to one of the conditions shown in Figs. 33 to 35 may be provided on the operation portion 15, and the sound adjusting circuit 210 may be configured to perform control so that the sound output range is set to one of the conditions shown in Figs. 33 to 35 in accordance with the viewing area information corresponding to the viewing range selected by the user. For example, when the viewing range shown in Fig. 33 is selected by the user, the sound adjusting circuit 210 controls the first to fourth speakers 16-1 to 16-4 so as to provide the sound output range shown in Fig. 33.

That is, by adjusting the viewing range of the display portion 7 and performing control using the sound adjusting circuit 210 as described above, the display image and/or the sound selected by the user can be provided to the crosstalk area.

In the above examples of Figs. 33 to 35, the noise canceling method has been employed in order to localize the user selected sound in the crosstalk area, but similar control can be achieved using a bone conduction speaker or a directional speaker as will be described below.

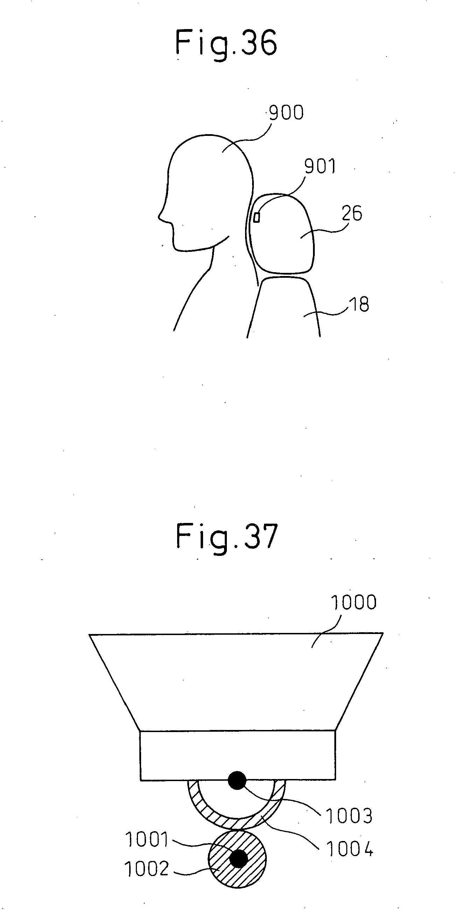

Fig. 36 shows an example of how a bone conduction speaker is mounted. In the example of Fig. 36, the bone conduction speaker 901 is embedded in a position that can contact a body part above than the neck of the observer 900 sitting in the rear seat 18 equipped with the headrest 26. Unlike seat cushions, the headrest 26 does not achieve intimate and stable contact with the body of the observer 900 but, since the skull or the upper spine, which is closest to the vocal cords, can detect bone conducted sound, if the observer 900 deliberately holds his or her head pressed against the headrest 26 a clear signal can be extracted. The position of the bone conduction speaker 901 or the number of bone conduction speakers to be arranged is not particularly limited, and various combinations can be employed.

In view of the above, if the first sound and the second sound are output from the respectively designated speakers, i.e., from the bone conduction speaker 901 embedded in the headrest 26 for the occupant of the rear seat 18 equipped with the headrest 26, from the first speaker 16-1 for the occupant of the driver's seat 13, from the second speaker 16-2 for the occupant of the assistant driver's seat 13, from the third speaker 16-3 for the occupant of the rear seat 18 equipped with the headrest 25, and from the fourth speaker 16-4 for the occupant of the rear seat 18 equipped with the headrest 27, then it becomes possible to deliver the designated sound to the occupant of each designated seat.

Fig. 37 shows a configuration example of a directional speaker. In Fig. 37, a gear 1002 is fixed to the rotating shaft 1001 of a motor whose operation is controlled by the sound adjusting circuit 210. The gear 1002 engages with a gear 1004 fixed to the directional speaker 1000; the gear 1004 is supported on a shaft 1003 so as to be rotatable around the shaft 1003. Accordingly, by controlling the motor using the sound adjusting circuit 210 (which stores the amount of control for the motor and selects the amount of control according to the playback condition), the direction of the directional speaker 1000 can be adjusted, and the directivity (direction) of the sound reproduced by the speaker can be controlled. Further, using a similar configuration to that shown in Fig. 37, it is possible to adjust the directivity of the speaker by manual operation.

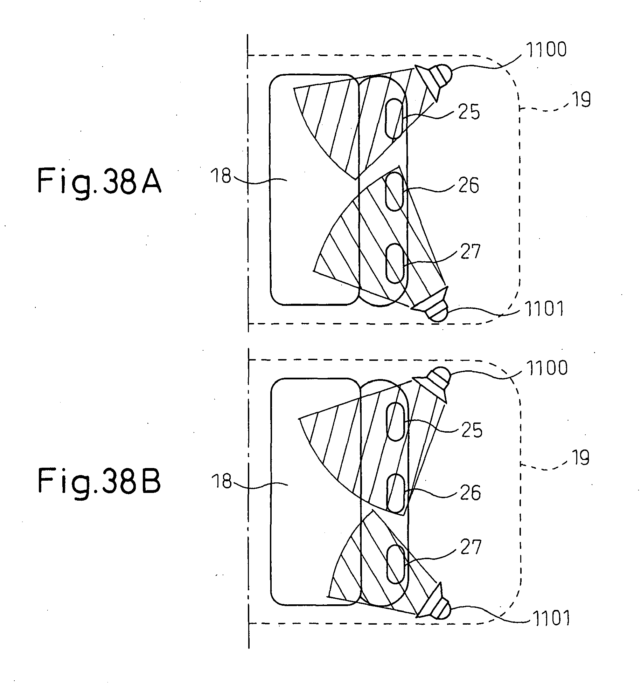

Fig. 38 shows an example of how the sound output range can be changed using the directional speaker shown in Fig. 37. In the example of Fig. 38, a first directional speaker 1100 similar to the one shown in Fig. 37 is mounted in place of the third speaker 16-3 shown in Fig. 33, and a second directional speaker 1101 similar to the one shown in Fig. 37 is mounted in place of the fourth speaker 16-4 shown in Fig. 33. In Fig. 38(A), by controlling the motor under instruction from the sound adjusting circuit 210, the first directional speaker 1100 is turned to a position that only covers the headrest 25 of the rear seat 18, while the second directional speaker 1101 is turned to a position that covers the headrests 26 and 27 of the rear seat 18. In Fig. 38(B), by controlling the motor under instruction from the sound adjusting circuit 210, the first directional speaker 1100 is turned to a position that covers the headrests 25 and 26 of the rear seat 18, while the second directional speaker 1101 is turned to a position that only covers the headrest 27 of the rear seat 18. By using the directional speakers in this way, the user selected sound can be localized in the crosstalk area.

In the above embodiment, a bone conduction speaker or a directional speaker has been used in order to localize the user selected sound in the crosstalk area. However, headphones or earphones may be used instead. In that case, a headphone or earphone jack or connector should be provided for the occupant located in the crosstalk area.

Further, in order to provide desired sound in a safer and more reliable manner, headphone or earphone jacks or connectors may be provided in combination with the speakers and detection sensors, not only for the occupant located in the crosstalk area but also for the occupants of other seats. For example, the sound output may be set so that the second sound is output from the headphones or earphones for the assistant driver's seat passenger, while the first sound is output from all the speakers.

In the above embodiment, it has been described how the selected display image or sound is provided to or localized in each designated seat in accordance with user selection, etc. However, in an emergency, it is preferable to perform the sound control so as to cancel or change the above setting. For example, when the navigation display image and navigation sound are being presented to the driver's seat side (in the first viewing range) and the CD playback display image and CD playback sound to the assistant driver's seat side (in the second viewing range), as shown in Figs. 32 and 6, if VICS information is received by the navigation unit or if emergency information concerning an earthquake or other disaster is received, the sound adjusting circuit 210 controls the first to fourth speakers 16-1 to 16-4 so that the emergency information is output from all the speakers 16-1 to 16-4. In this case, the sound adjusting circuit 210 judges the type of information from the sound signal supplied from the navigation unit 206 and, based on the result of the judgment, performs control so that the emergency information is output from all the speakers. Alternatively, control may be performed so that when predetermined emergency information is received by the navigation unit 206, a specific signal is sent to the control portion 200 and the sound adjusting circuit 210 which, upon reception of the specific signal, perform control to switch all the sound outputs and display image outputs to the sound and display image received from the navigation unit 206.

### (APPENDED NOTES)

1. A display device comprising:
   a display section capable of displaying independent images intended for a plurality of different viewing directions on the same screen;
   a light-blocking section for controlling a direction of light emerging from the display section;
   an information acquiring section for acquiring light emergence information concerning the direction of the light emerging from the display section; and
   a light-blocking position varying section for varying an emerging light blocking position on the light-blocking section in accordance with the light emergence information acquired by the information acquiring section.
2. The display device according to note 1, wherein the light emergence information is information that indicates a viewing angle adjustment value for each of the viewing directions in which the independent images are output.
3. The display device according to note 1 or 2, comprising a preset section which has a viewing angle adjustment value storing section, connected to the information acquiring section, for storing the viewing angle adjustment value, and
   a light emergence information output section which outputs to the information acquiring section the light emergence information that matches the adjustment value stored in the viewing angle adjustment value storing section.
4. The display device according to note 3, wherein the viewing angle adjustment value storing section stores the viewing angle adjustment value for each of the viewing directions in which the independent images are output.
5. The display device according to note 4, wherein the viewing angle adjustment value storing section stores a plurality of viewing angle adjustment values for each of the viewing directions in which the independent images are output.
6. The display device according to any one of notes 1 to 5, wherein the light-blocking position varying section is formed from a liquid crystal light-transmission/blocking plate which controls the transmission/blocking of light by using liquid crystal elements.
7. The display device according to any one of notes 1 to 6, wherein the information acquiring section acquires the light emergence information by taking as an input a signal entered via a viewing angle adjusting switch to adjust the viewing angle.
8. The display device according to note 7, comprising an adjustment image displaying section for displaying an adjustment image on the display section while the adjustment is being made using the viewing angle adjusting switch.
9. The display device according to note 7 or 8, comprising an adjustment value displaying section for displaying an image showing the viewing angle adjustment value on the display section while the adjustment is being made using the viewing angle adjusting switch.
10. The display device according to note 7 or 8, comprising a viewable range adjusting section for reducing a viewable range, an angle range within which an intended image is viewable, while the adjustment is being made using the viewing angle adjusting switch.
11. The display device according to any one of notes 1 to 10, wherein the information acquiring section acquires the light emergence information by taking as an input a driving condition signal that indicates a vehicle driving condition.
12. The display device according to any one of notes 1 to 11, wherein the information acquiring section acquires the light emergence information by taking as an input a temperature signal that indicates an ambient temperature.
13. The display device according to any one of notes 1 to 12, wherein the information acquiring section acquires the light emergence information by taking as an input a position signal that indicates a viewer's position.
14. The display device according to note 1, wherein the information acquiring section acquires the light emergence information by taking as an input an eye position signal that indicates the positions of the left and right eyes of a viewer, and
   the light-blocking position varying section varies the emerging light blocking position on the light-blocking section so that the viewer can view the independent images with his left and right eyes, respectively.
15. A display device comprising:
   a display section capable of displaying independent images intended for a plurality of different viewing directions on the same screen;
   a light-blocking section for controlling a direction of light emerging from the display section;
   a viewable range information acquiring section for acquiring viewable range information that indicates a viewable range defining an angle range within which an intended image is viewable; and
   a light-blocking position varying section for varying an emerging light blocking position on the light-blocking section in accordance with the viewable range information acquired by the viewable range information acquiring section.
16. The display device according to note 15, wherein the viewable range information is information that indicates a viewable range adjustment value for each of the viewing directions in which the independent images are output.
17. The display device according to note 15 or 16, comprising a preset section has a viewable range information storing section, connected to the viewable range information acquiring section, for storing the viewable range adjustment value, and
   a viewable range information output section which outputs to the viewable range information acquiring section the viewable range information that matches the adjustment value stored in the viewable range information storing section.
18. The display device according to note 17, wherein the viewable range information storing section stores the viewable range adjustment value for each of the viewing directions in which the independent images are output.
19. The display device according to note 18, wherein the viewable range information storing section stores a plurality of viewable range adjustment values for each of the viewing directions in which the independent images are output.
20. The display device according to any one of notes 15 to 19, wherein the viewable range information acquiring section acquires the viewable range information by taking as an input a signal entered via a viewable range adjusting switch to adjust the viewable range.
21. A display device comprising:
   a display section capable of displaying independent images intended for a plurality of different viewing directions on the same screen; and
   a light-blocking section for controlling a direction of light emerging from the display section so that a viewing angle for an image intended for a driver's seat and a viewing angle for an image intended for an assistant driver's seat differ from each other, the viewing angle being measured along a width direction of a vehicle in which the display section is mounted.
22. The display device according to note 21, wherein the light-blocking section controls the direction of the light emerging from the display section so that the viewing angle for the image intended for the assistant driver's seat becomes wider than the viewing angle for the image intended for the driver's seat.
23. The display device according to note 21, wherein the light-blocking section controls the direction of the light emerging from the display section so that the viewing angle for the image intended for the driver's seat becomes wider than the viewing angle for the image intended for the assistant driver's seat.
24. A display device comprising:
   a display section capable of displaying independent display images intended for a plurality of different viewing directions on the same screen;
   an information acquiring section for acquiring orientation information concerning the orientation of the display section; and
   a display direction varying section for varying the orientation of the display section based on the orientation information acquired by the information acquiring section.
25. The display device according to note 24, further comprising a sensor for detecting the position of an observer observing the display section,
   wherein the information acquiring section acquires, as the orientation information, position information supplied from the sensor.
26. The display device according to note 25, further comprising a storing section in which the orientation information to be set in accordance with the position of the observer of the display section is stored in advance,
   wherein the information acquiring section acquires the orientation information from the position information by using the storing section.
27. The display device according to note 24, wherein the information acquiring section displays on the display section an indication relating to a change in the orientation of the display section.
28. The display device according to note 25, wherein the information acquiring section displays on the display section an indication relating to the position of the observer of the display section.
29. The display device according to note 24, further comprising an interface section for acquiring vehicle information concerning the vehicle in which the display device is mounted,
   wherein the information acquiring section acquires as the orientation information the vehicle information acquired via the interface section.
30. The display device according to note 29, further comprising a storing section in which the orientation information to be set in accordance with the vehicle information is stored in advance,
   wherein the information acquiring section acquires the orientation information from the vehicle information by using the storing section.
31. A display device comprising:
   a display section capable of displaying independent display images intended for a plurality of different viewing directions on the same screen; and
   a display direction setting section for setting the orientation of the display section in such a manner that the display section is laterally asymmetrically positioned with respect to a vehicle in which the display section is mounted.
32. The display device according to note 31, wherein the display direction setting section sets the orientation of the display section in accordance with the vehicle in which the display section is mounted, in such a manner that the independent display images intended for the plurality of different viewing directions will not become simultaneously visible to any occupant seated in the vehicle.
33. The display device according to note 31, wherein the display direction setting section sets the orientation of the display section in such a manner that the number of occupants who can view an image intended for a driver's seat from among the independent display images intended for the plurality of different viewing directions becomes larger than the number of occupants who can view an image intended for an assistant driver's seat from among the independent display images intended for the plurality of different viewing directions.
34. The display device according to note 31, wherein the display direction setting section sets the orientation of the display section in such a manner that the number of occupants who can view an image intended for an assistant driver's seat from among the independent display images intended for the plurality of different viewing directions becomes larger than the number of occupants who can view an image intended for a driver's seat from among the independent display images intended for the plurality of different viewing directions.
35. The display device according to any one of notes 31 to 34, further comprising an information acquiring section for acquiring orientation information concerning the orientation of the display section,
   wherein the display direction setting section varies the orientation of the display section based on the orientation information acquired by the information acquiring section.
36. The display device according to any one of notes 31 to 34, wherein the display direction setting section includes a mounting member for mounting the display device in such a manner that the display device having the display section is oriented at a prescribed angle with respect to the vehicle in which the display device is mounted.
37. The display device according to any one of notes 31 to 34, wherein the display direction setting section includes a mounting member for mounting the display section in such a manner that the display section is set with a prescribed orientation with respect to the display device.
38. The display device according to any one of notes 31 to 34, wherein the display section includes a liquid crystal display panel for displaying the display images,
   wherein the display direction setting section includes a mounting member for mounting the liquid crystal display panel in such a manner that the liquid crystal display panel is set with a prescribed orientation with respect to the display section.
39. A display device comprising:
   a display section capable of displaying independent display images intended for a plurality of different viewing directions on the same screen; and
   a sound control section for controlling a plurality of sound output sections so that sounds intended for viewing areas, for the plurality of display images, are localized in the respective viewing areas.
40. The display device according to note 39, wherein for an area where the independent display images intended for the respective viewing directions are simultaneously visible, the sound control section performs control so that, of the sounds accompanying the simultaneously visible display images, a selected one sound is localized in that area.
41. The display device according to note 39, wherein for an area where the independent display images intended for the respective viewing directions are simultaneously visible, the sound control section performs control so that all the sounds accompanying the simultaneously visible display images are localized in that area.
42. The display device according to note 40, further comprising a selecting section for selecting the sound to be localized in the area where the independent display images intended for the respective viewing directions are simultaneously visible.
43. The display device according to note 39, further comprising a viewing area information acquiring section for acquiring viewing area information that matches a viewing area for one display image selected from among the independent display images intended for the plurality of different viewing directions,
   wherein the sound control section controls the sound output sections in accordance with the viewing area information so that the sound accompanying the selected one display image is localized in the viewing area.
44. The display device according to note 39, further comprising an importance level information acquiring section for acquiring importance level information that matches the importance level of the sound that each of the sound output sections outputs,
   wherein the sound control section performs control so as to output the sound that has been judged to contain important information based on the importance level information.
45. The display device according to note 39, wherein the sound control section performs control so that when the sound ends for one of the independent display images intended for the plurality of different viewing directions, the sound for another display image is output.
46. The display device according to note 39, further comprising selecting means for selecting the sound to be output from among the sounds accompanying the independent display images intended for the plurality of different viewing directions.
47. The display device according to note 39, wherein the sound output sections include a plurality of speakers,
   wherein based on the content of the sound accompanying one of the independent display images intended for the plurality of different viewing directions, the sound control section determines from which of the speakers the sound is to be output.
48. The display device according to note 39, further comprising a selecting section for selecting a sound that matches a viewing position,
   wherein the sound control section controls the sound output sections so that the sound selected by the selecting section is localized in the viewing position.
49. The display device according to note 48, further comprising a plurality of sound detecting sections,
   wherein the sound control section controls the sound output sections so that the sound selected by the selecting section is localized in the viewing position by canceling any sound other than the selected sound as noise in that viewing position in accordance with sound detection signals supplied from the plurality of sound detecting sections.
50. The display device according to any one of notes 39 to 49, further comprising an image source section which outputs image data to the display section in order to display the independent display images intended for the plurality of different viewing directions.
51. The display device according to note 50, wherein the image source section includes a receiver for receiving TV images from broadcast channels or a playback section for playing back an image recording medium.
52. The display device according to any one of notes 39 to 51, wherein the sound output sections include speakers and headphones or earphones, and
   the sound control section performs control so that the sound for the viewing area for one of the independent display images intended for the plurality of different viewing directions is output from the speakers while the sound for the viewing area for another one of the independent display images intended for the plurality of different viewing directions is output from the headphones or earphones.
53. The display device according to any one of notes 39 to 51, wherein the sound output sections include a bone conduction speaker or a directional speaker.
54. A display device comprising:
   a display section capable of displaying independent display images intended for a plurality of different viewing directions on the same screen;
   a display control section which supplies display data by processing an image source; and
   a sound control section for controlling a plurality of sound output section so that sounds intended for viewing areas for the plurality of display images are localized in the respective viewing areas.

## Claims

1. A display device comprising:
a display section capable of displaying independent images intended for a plurality of different viewing directions on the same screen;
an information acquiring section for acquiring orientation information concerning the orientation of the images; and
an image direction varying section for varying the orientation of the images based on the orientation information acquired by the information acquiring section.

2. The display device according to claim 1, further comprising a light-blocking section for controlling a direction of light emerging from the display section,
wherein the orientation information is light emergence information concerning the direction of the light emerging from the display section, and
the image direction varying section includes a light-blocking position varying section for varying an emerging light blocking position on the light-blocking section, based on the light emergence information.

3. The display device according to claim 2,
wherein the light emergence information is information that indicates a viewing angle adjustment value for each of the viewing directions in which the independent images are output.

4. The display device according to claim 2, further comprising a viewing angle adjustment value storing section, connected to the information acquiring section, for storing the viewing angle adjustment value, and
a light emergence information output section for outputting the light emergence information that matches the adjustment value stored in the viewing angle adjustment value storing section to the information acquiring section.

5. The display device according to claim 4, wherein the viewing angle adjustment value storing section stores the viewing angle adjustment value for each of the viewing directions in which the independent images are output.

6. The display device according to claim 4, wherein the viewing angle adjustment value storing section stores a plurality of viewing angle adjustment values for each of the viewing directions in which the independent images are output.

7. The display device according to claim 1, further comprising a light-blocking section for controlling a direction of light emerging from the display section,
wherein the orientation information is viewable range information that indicates a viewable range defining an angle range within which an intended image is viewable, and
the image direction varying section includes a light-blocking position varying section for varying an emerging light blocking position on the light-blocking section, based on the viewable range information.

8. The display device according to claim 7, wherein the viewable range information is information that indicates a viewable range adjustment value for each of the viewing directions in which the independent images are output.

9. The display device according to claim 7, further comprising a viewable range information storing section, connected to the information acquiring section, for storing the viewable range adjustment value, and
a viewable range information output section for outputting the viewable range information that matches the adjustment value stored in the viewable range information storing section to the information acquiring section.

10. The display device according to claim 9, wherein the viewable range information storing section stores the viewable range adjustment value for each of the viewing directions in which the independent images are output.

11. The display device according to claim 9, wherein the viewable range information storing section stores a plurality of viewable range adjustment values for each of the viewing directions in which the independent images are output.

12. The display device according to claim 1, further comprising a light-blocking section for controlling a direction of light emerging from the display section so that a viewing angle for an image intended for a driver's seat and a viewing angle for an image intended for an assistant driver's seat differ from each other, the viewing angle being measured along a width direction of a vehicle in which the display section is mounted.

13. The display device according to claim 12, wherein the light-blocking section controls the direction of the light emerging from the display section so that the viewing angle for the image intended for the assistant driver's seat becomes wider than the viewing angle for the image intended for the driver's seat.

14. The display device according to claim 12, wherein the light-blocking section controls the direction of the light emerging from the display section so that the viewing angle for the image intended for the driver's seat becomes wider than the viewing angle for the image intended for the assistant driver's seat.

15. The display device according to claim 1, wherein the orientation information is information concerning the orientation of the display section, and
the image direction varying section includes a display direction varying section for varying the orientation of the display section based on the orientation information.

16. The display device according to claim 15, further comprising a sensor for detecting the position of an observer observing the display section, wherein
the information acquiring section acquires, as the orientation information, position information supplied from the sensor.

17. The display device according to claim 16, further comprising a storing section in which the orientation information to be set in accordance with the position of the observer of the display section is stored in advance,
wherein the information acquiring section acquires the orientation information from the position information by using the storing section.

18. The display device according to claim 1, wherein the image direction varying section includes a display direction setting section for setting the orientation of the display section in such a manner the display section is laterally asymmetrically positioned with respect to a vehicle in which the display section is mounted.

19. The display device according to claim 18, wherein the display direction setting section sets the orientation of the display section in accordance with the vehicle in which the display section is mounted, in such a manner that the independent display images intended for the plurality of different viewing directions will not become simultaneously visible to any occupant seated in the vehicle.

20. The display device according to claim 1, further comprising a sound control section for controlling a plurality of sound output sections so that sounds intended for viewing areas for the plurality of display images are localized in the respective viewing areas.
